# EUROPEAN PATENT APPLICATION

(11) **EP 4 486 016 A1**
(43) Date of publication of application: **01.01.2025**
(21) Application number: 22927773.6
(22) Date of filing: 25.02.2022
(51) Int. Cl.: H04W 52/02

(54) **WIRELESS COMMUNICATION METHOD, TERMINAL DEVICE AND REFERENCE DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: RGTH
(86) International application number: PCT/CN2022/078011
(87) International publication number: WO 2023/159489

(57) **Abstract**

A wireless communication method, a terminal device and a reference device are provided, which are conducive to balancing measurement performance of a terminal device and terminal power saving. The method includes: determining, by a terminal device, a target measurement manner for performing radio resource management (RRM) according to target signal(s) sent by at least one reference device in a set of reference devices, where the target signal(s) are transmitted over zero-power-consumption radio interface(s).

## Description

### TECHNICAL FIELD

Embodiments of the present application relate to the field of communication, and in particular, to wireless communication methods, a terminal device and a reference device.

### BACKGROUND

Accurate measurements of cell quality and beam quality are the basis for effective execution of wireless resource management and mobility management. However, continuous measurement by a terminal device is not conducive to terminal power saving. A relaxed measurement facilitates the realization of the terminal power saving, but may have some impact on mobility management. Therefore, how to make a compromise between the measurement performance of the terminal device and the terminal power saving is an urgent problem that needs to be solved.

### SUMMARY

The present application provides wireless communication methods, a terminal device and a reference device, which are conducive to balance measurement performance of a terminal device and terminal power saving.

In a first aspect, a wireless communication method is provided, which includes: determining, by a terminal device, a target measurement manner for performing radio resource management (RRM) according to target signal(s) sent by at least one reference device in a set of reference devices, where the target signal(s) are transmitted over zero-power-consumption radio interface(s).

In a second aspect, a wireless communication method is provided, which includes: sending, by a reference device, a target signal, where the target signal is used by a terminal device to determine a target measurement manner for performing radio resource management (RRM), and the target signal is transmitted over a zero-power-consumption radio interface.

In a third aspect, a terminal device is provided, which is configured to perform the method in the foregoing first aspect or various implementations thereof.

Specifically, the terminal device includes a functional module configured to perform the method in the foregoing first aspect or various implementations thereof.

In a fourth aspect, a network device is provided, which is configured to perform the method in the foregoing second aspect or various implementations thereof.

Specifically, the network device includes a functional module configured to perform the method in the foregoing second aspect or various implementations thereof.

In a fifth aspect, a terminal device is provided, which includes a processor and a memory. The memory is configured to store a computer program, and the processor is configured to call and run the computer program stored in the memory to perform the method in the foregoing first aspect or various implementations thereof.

In a sixth aspect, a network device is provided, which includes a processor and a memory. The memory is configured to store a computer program, and the processor is configured to call and run the computer program stored in the memory to perform the method in the foregoing second aspect or various implementations thereof.

In a seventh aspect, a chip is provided, which is configured to implement the method in any one of the first and second aspects or the various implementations thereof.

Specifically, the chip includes a processor, which is configured to call and run a computer program from a memory to cause a device installed with the chip to perform the method in any one of the first and second aspects or the various implementations thereof.

In an eighth aspect, a computer-readable storage medium is provided, which is configured to store a computer program. The computer program causes a computer to perform the method in any one of the first and second aspects or the various implementations thereof.

In a ninth aspect, a computer program product is provided, which includes computer program instructions. The computer program instructions cause a computer to perform the method in any one of the first and second aspects or the various implementations thereof.

In a tenth aspect, a computer program is provided. When executed on a computer, the computer program causes the computer to perform the method in any one of the first and second aspects or the various implementations thereof.

Based on the foregoing technical solutions, a terminal device may receive target signal(s) sent by reference device(s) in a set of reference devices over a zero-power-consumption radio interface, and determine a target measurement manner for performing RRM based on the target signal(s). Therefore, the terminal device does not need to continuously measure a reference signal on a serving cell, and does not need to determine, based on the measurement result, a target measurement manner for performing RRM, which is conducive to terminal power saving.

### BRIEF DESCRIPTION OF THE DRAWINGS

FIG. 1 is a schematic diagram of an architecture of a communication system provided by embodiments of the present application;
FIG. 2 is a schematic diagram of a zero-power-consumption communication system according to an example of the present application;
FIG. 3 is a principle diagram of power harvesting according to an embodiment of the present application;
FIG. 4 is a principle diagram of backscatter communication according to an embodiment of the present application;
FIG. 5 is a circuit principle diagram of resistive load modulation according to an embodiment of the present application;
FIG. 6 is a schematic diagram of an SMTC configuration according to an embodiment of the present application;
FIG. 7 is a schematic diagram of a method for determining a low mobility criterion;
FIG. 8 is a schematic diagram of a wireless communication method provided by embodiments of the present application;
FIG. 9 is a schematic deployment diagram of a set of reference devices provided by embodiments of the present application;
FIG. 10 is another schematic deployment diagram of a set of reference devices provided by embodiments of the present application;
FIG. 11 is yet another schematic deployment diagram of a set of reference devices provided by embodiments of the present application;
FIG. 12 is still another schematic deployment diagram of a set of reference devices provided by embodiments of the present application;
FIG. 13 is a schematic block diagram of a terminal device provided by embodiments of the present application;
FIG. 14 is a schematic block diagram of a reference device provided by embodiments of the present application;
FIG. 15 is a schematic block diagram of a communication device provided by embodiments of the present application;
FIG. 16 is a schematic block diagram of a chip provided by embodiments of the present application; and
FIG. 17 is a schematic block diagram of a communication system provided by embodiments of the present application.

### DETAILED DESCRIPTION

Technical solutions in the embodiments of the present application will be described below with reference to the accompanying drawings in the embodiments of the present application. It is apparent that the embodiments described are some rather than all of the embodiments of the present application. Based on the embodiments of the present application, all other embodiments obtained by a person of ordinary skill in the art without creative efforts fall within the protection scope of the present application.

Technical solutions of embodiments of the present application may be applied to various communication systems, such as a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunications system (UMTS), a wireless local area network (WLAN), wireless fidelity (Wi-Fi), a 5th-Generation communication (5th-Generation, 5G) system, a cellular Internet of Things system, a cellular passive Internet of Things system, or other communication systems.

Generally, traditional communication systems support a limited quantity of connections, and are easy to implement. However, with the development of communication technology, mobile communication systems will not only support traditional communication, but also support, for example, device to device (D2D) communication, machine to machine (M2M) communication, machine type communication (MTC), vehicle to vehicle (V2V) communication, or vehicle to everything (V2X) communication, and the embodiments of the present application may be applied to these communication systems as well.

Optionally, the communication systems in the embodiments of the present application may be applied to a carrier aggregation (CA) scenario, a dual connectivity (DC) scenario, or a standalone (SA) networking scenario.

Optionally, the communication systems in the embodiments of the present application may be applied to an unlicensed spectrum, which may also be considered as a shared spectrum. The communication systems in the embodiments of the present application may also be applied to a licensed spectrum, which may also be considered as an unshared spectrum.

Various embodiments of the present application are described in combination with a network device and a terminal device. The terminal device may also be referred to as a user equipment (UE), an access terminal, a subscriber unit, a subscriber station, a mobile station, a mobile console, a remote station, a remote terminal, a mobile device, a user terminal, a terminal, a wireless communication device, a user agent or a user apparatus.

In embodiments of the present application, the network device may be a device configured to communicate with a mobile device, and may be an access point (AP) in the WLAN, a base transceiver station (BTS) in GSM or CDMA, a NodeB (NB) in WCDMA, an evolutional node B (eNB or eNodeB) in LTE, a relay station or access point, a vehicle-mounted device, a wearable device, a network device (gNB) in an NR network, a network device in cellular Internet of Things, a network device in cellular passive Internet of Things, a network device in the future evolved PLMN network, or a network device in an NTN network.

As an example and not by way of limitation, the network device in the embodiments of present application may have mobility characteristics. For example, the network device may be a mobile device. Optionally, the network device may be a satellite, or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station disposed in a position on land or in a water region.

In embodiments of the present application, the network device may provide a service for a cell, and the terminal device communicates with the network device through a transmission resource (e.g., a frequency-domain resource, which is also referred to as a spectrum resource) used by the cell. The cell may be a cell corresponding to the network device (e.g., a base station), and the cell may belong to a macro base station, or may belong to a base station corresponding to a small cell. Small cells herein may include a metro cell, a micro cell, a pico cell, a femto cell, and the like. These small cells are characterized by a small coverage range and a low transmission power, and are suitable for providing high-speed data transmission services.

The terminal device may be a station (ST) in the WLAN, or may be a cellular phone, a wireless phone, a session initiation protocol (SIP) phone, a wireless local loop (WLL) station, a personal digital assistant (PDA) device, a handheld device with a wireless communication function, a computing device or another processing device connected to a wireless modem, a vehicle-mounted device, a wearable device, a terminal device in a next generation communication system (e.g., an NR network), a terminal device in a future evolved public land mobile network (PLMN), a terminal device in cellular Internet of Things, or a terminal device in cellular passive Internet of Things.

In embodiments of the present application, the terminal device may be deployed on land including indoor or outdoor, handheld, wearable or vehicle-mounted; alternatively, the terminal device may be deployed on water (such as on ships); alternatively, the terminal device may be deployed aerially (such as in airplanes, balloons and satellites).

In embodiments of the present application, the terminal device may be a mobile phone, a Pad, a computer with wireless transceiving function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

As an example and not by way of limitation, the terminal device in embodiments of the present application may also be a wearable device. The wearable device may also be referred to as a wearable smart device, which is a general term of wearable devices developed by intelligent design on daily wear by applying wearable technology, such as glasses, gloves, a watch, clothing and shoes. The wearable device is a portable device that is worn directly on a body, or integrated into clothes or accessories of a user. The wearable device is not only a hardware device, but also implements powerful functions through software support as well as data interaction or cloud interaction. Generalized wearable smart devices include devices which are fully functional, have large sizes, and may implement complete or partial functions without relying on smart phones, such as a smart watch or smart glasses, and devices which focus on a certain kind of application functions only and need to be used in conjunction with other devices such as smart phones, such as various smart bracelets, and smart jewelries for monitoring physical signs.

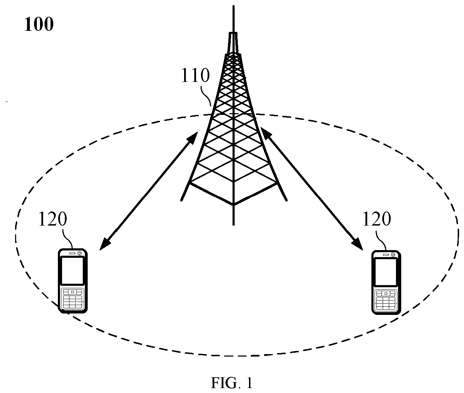

Exemplary, a communication system 100 to which the embodiments of the present application are applicable is shown in FIG. 1. The communication system 100 may include a network device 110, and the network device 110 may be a device that communicates with a terminal device 120 (or referred to as a communication terminal or a terminal). The network device 110 may provide communication coverage for a specific geographical area, and may communicate with the terminal device(s) located in the coverage area.

FIG. 1 exemplarily illustrates one network device and two terminal devices. Optionally, the communication system 100 may include a plurality of network devices, each of which may have a coverage area in which other number of terminal devices are included, which is not limited in the embodiments of the present application.

Optionally, the communication system 100 may further include a network controller, a mobile management entity or other network entities, which is not limited in the embodiments of the present application.

It should be understood that devices with communication functions in the network/system in the embodiments of the present application may be called communication devices. In an example of the communication system 100 shown in FIG. 1, the communication devices may include the network device 100 with a communication function and the terminal device 120 with a communication function. The network device 110 and the terminal device 120 may be the specific devices mentioned in above, which will not be repeated here. The communication devices may further include other devices in the communication system 100, such as a network controller, a mobile management entity and other network entities, which is not limited in the embodiments of the present application.

It should be understood that terms "system" and "network" herein are often used interchangeably herein. The term "and/or" herein is only an association relationship to describe associated objects, which indicates that there may be three kinds of relationships. For example, A and/or B may indicate three cases where: A exists alone, both A and B exist, and B exists alone. In addition, a character "/" herein generally indicates that related objects before and after the character "/" are in an "or" relationship.

It should be understood that "indication" involved in the embodiments of the present application may be a direct indication, may be an indirect indication, or may represent an association relationship. For example, A indicating B may mean that A indicates B directly, for example, B may be obtained through A; or may mean that A indicates B indirectly, for example, A indicates C, and B may be obtained through C; or may also mean that there is an association between A and B.

In the description of the embodiments of the present application, the term "correspond" may mean that there is a direct or indirect correspondence between two elements, or may indicate an association between two elements, or may indicate a relationship of indicating and being indicated, configuring and being configured, etc.

In the embodiments of the present application, "predefined" may be achieved by pre-storing corresponding codes, tables or other manners that may be used to indicate relevant information in devices (e.g., including a terminal device and a network device). The specific implementation is not limited in the present application. For example, "predefined" may refer to those defined in a protocol.

In the embodiments of the present application, "protocols" may refer to standard protocols in the field of communication, which may include, for example, a LTE protocol, an NR protocol and the relevant protocol applied in the future communication system, which is not limited in the present application.

In order to facilitate the understanding of the technical solutions of the embodiments of the present application, related technologies of the present application will be described.

### I. Zero-power-consumption communication

Zero-power-consumption communication uses technologies of power harvesting and backscatter communication. A zero-power-consumption communication network consists of network device(s) and zero-power-consumption terminal(s).

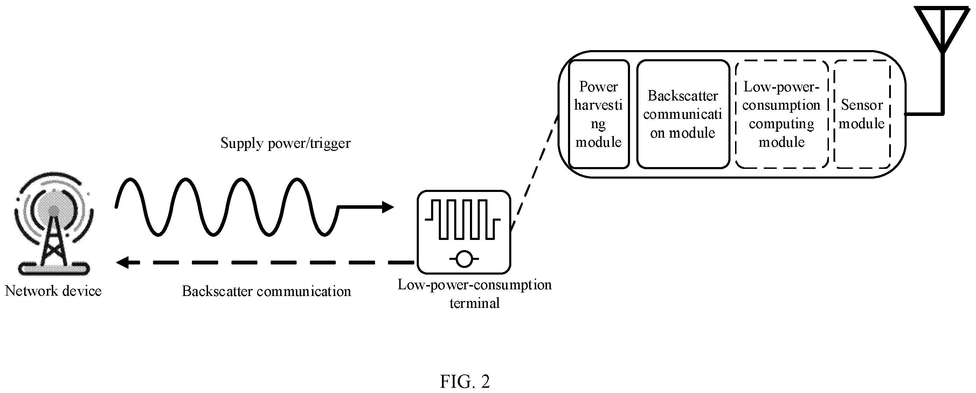

As shown in FIG. 2, the network device is configured to send wireless power supply signals and downlink communication signals to the zero-power-consumption terminal, and to receive backscatter signals from the zero-power-consumption terminal. A basic zero-power-consumption terminal includes a power harvesting module, a backscatter communication module, and a low-power-consumption computing module. In addition, the zero-power-consumption terminal may further have a memory for storing some basic information (e.g., object identification) or sensor(s) for obtaining sensor data such as ambient temperature and ambient humidity.

The key technologies in zero-power-consumption communication will be described in the following.

### 1. Radio frequency (RF) power harvesting

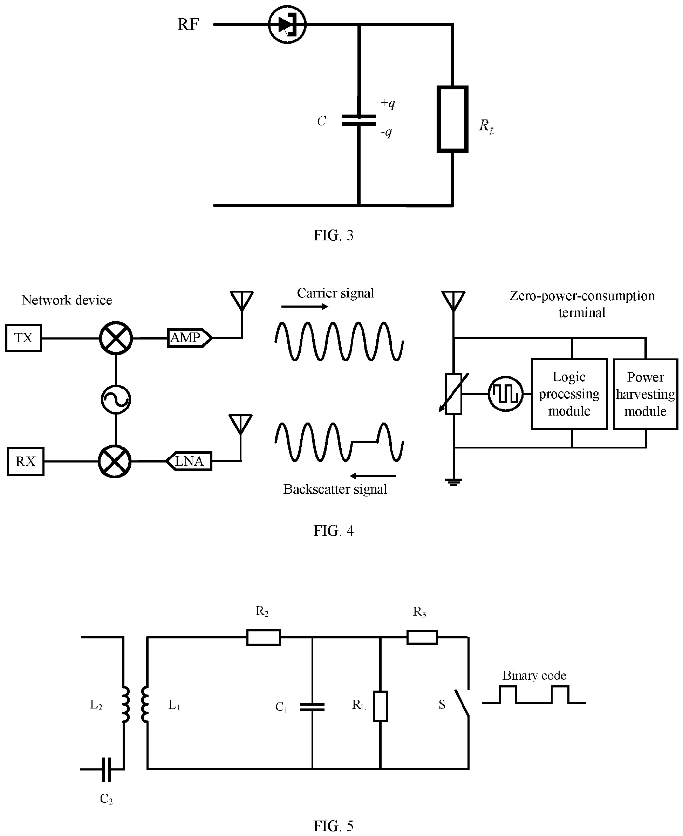

As shown in FIG. 3, an RF power harvesting module harvests electromagnetic wave power in space based on principles of electromagnetic induction, so as to obtain the power required to drive the zero-power-consumption terminal, for example, for driving a low-power-consumption demodulation and modulation module, a sensor, and memory reading. Therefore, the zero-power-consumption terminal does not need conventional batteries.

### 2. Backscatter communication (back scattering)

As shown in FIG. 4, the zero-power-consumption terminal receives a carrier signal sent by the network device, modulates the carrier signal so as to carry information to be sent, and radiates a modulated signal via an antenna. The information transmission process is called backscatter communication. Backscatter is inextricably linked with the function of load modulation. Load modulation completes the modulation process by adjusting and controlling circuit parameters of an oscillation loop of the zero-power-consumption terminal according to the pace of data streams, so that parameters such as an impedance of an electronic tag change accordingly. Load modulation technology mainly includes two methods: resistive load modulation and capacitive load modulation. In the resistive load modulation, a resistor is connected in parallel with a load, and is switched on or off based on control of a binary data stream, as shown in FIG. 5. On/off of the resistor may cause a voltage of a circuit to change, thus realizing amplitude shift keying (ASK), that is, signal modulation and transmission is realized by adjusting an amplitude of a backscatter signal of the zero-power-consumption terminal. Similarly, in the capacitive load modulation, a resonant frequency of a circuit may be changed by on/off of a capacitor, thereby realizing frequency shift keying (FSK), that is, signal modulation and transmission is achieved by adjusting an operating frequency of the backscatter signal of the zero-power-consumption terminal.

It can be seen that the zero-power-consumption terminal uses load modulation to modulate information on an incoming wave signal, thereby realizing the backscatter communication process. Therefore, zero-power-consumption terminals have significant advantages as follows:
(1) The terminal does not actively transmit signals, and thus does not need complex radio frequency links such as PAs, and radio frequency filters;
(2) The terminal does not need to actively generate high-frequency signals, and thus does not need a high-frequency crystal oscillator;
(3) With the help of backscatter communication, the signal transmission of the terminal does not need to consume the terminal's own power. 2. RF power harvesting.

### 3. Encoding technology

Data transmitted by an electronic tag may be represented by binary one (" 1") and binary zero ("0") through different forms of codes. A wireless radio frequency identification system typically uses one of the following encoding methods: non-return to zero (NRZ) inverted encoding, Manchester encoding, unipolar return to zero encoding, differential bi-phase (DBP) encoding, differential encoding, pulse interval encoding (PIE), bi-phase space encoding (FM0), Miller encoding, and differential encoding. Colloquially, different encoding technologies use different pulse signals to represent 0 and 1.

### 3.1 Non-return to zero (NRZ) inverted encoding

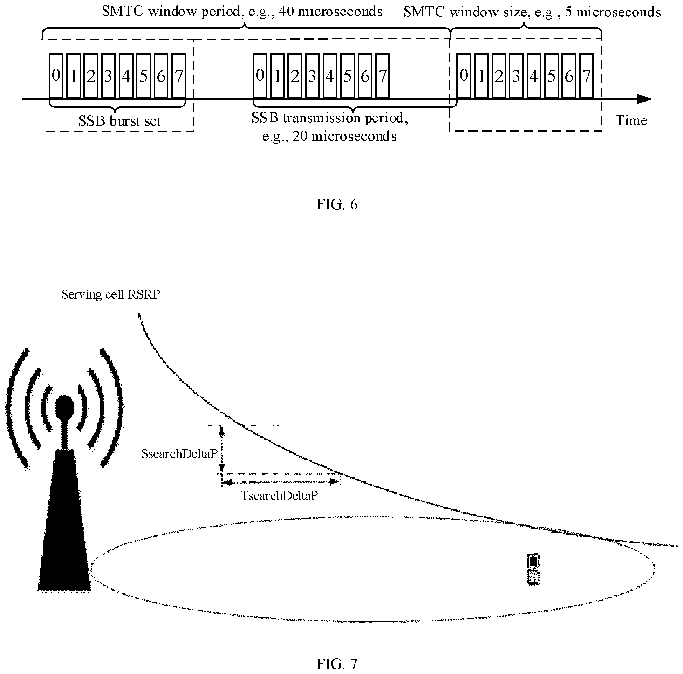

Non-return to zero inverted coding uses a high level to represent a binary 1 and a low level to represent a binary 0. FIG. 6 shows an example of an NRZ encoding rule.

### 3.2 Unipolar return to zero encoding

For unipolar return to zero encoding, a positive current is provided when code 1 is sent, but duration of the positive current is shorter than a time width of an encoding element, that is, a narrow pulse is sent; and the current is absent when code 0 is sent.

By comparing NRZ encoding and unipolar RZ encoding, it can be seen that both are unipolar codes, but the duty cycle of NRZ encoding is 100% and the duty cycle of unipolar RZ encoding is 50%.

### 3.3 Manchester encoding

Manchester encoding is also called split phase encoding or bi-phase encoding. In Manchester encoding, the difference in phase due to the voltage transition is used to distinguish between 1 and 0. A high-to-low transition represents 1, and a low-to-high transition represents 0.

### 3.4 Miller encoding

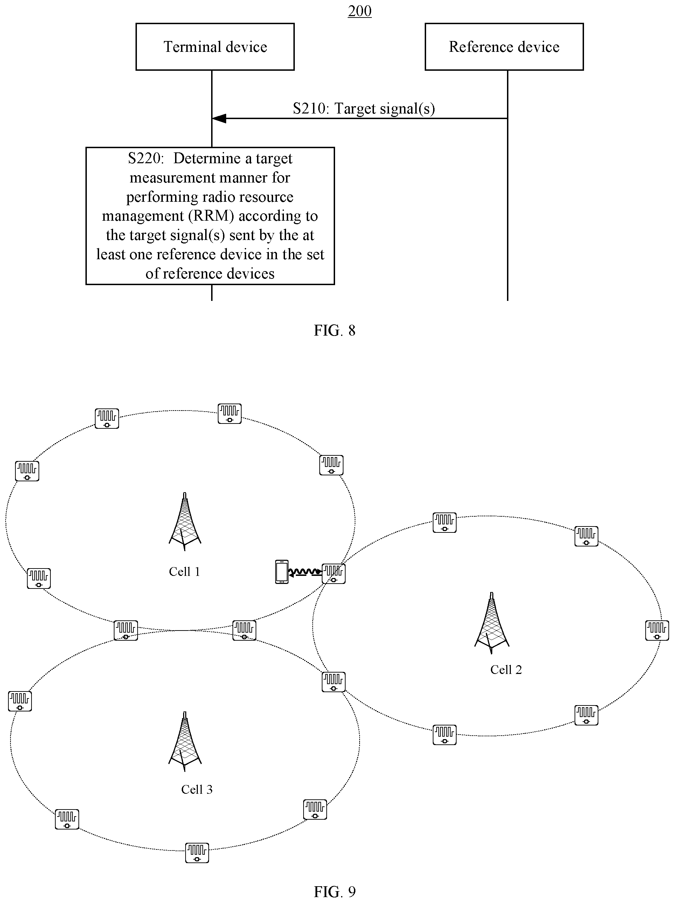

Miller encoding is a modified Manchester encoding. Miller encoding utilizes any edge within half a bit period to represent a binary 1, and a constant level within the next bit period to represent a binary 0. In other words, in Miller encoding, a level transition at the middle of a bit represents data 1, and the absence of a level transition at the middle of a bit represents data 0. In addition, when consecutive binary 0s appear, a level transition occurs at the end of the bit. FIG. 9 shows an example of a Miller encoding rule.

### 3.5 Differential bi-phase (DBP) encoding

Differential bi-phase (DBP) encoding uses any edge within half a bit period to represent a binary 0, and the absence of an edge to represent a binary 1. In addition, at the beginning of each bit period, the level is inverted.

### 3.6 Differential Encoding

For differential encoding, each binary 1 to be transmitted causes a transition of the signal level, while for a binary 0, the signal level keeps constant.

### 3.7 Pulse interval encoding (PIE)

Pulse interval encoding is an encoding method for a reader to transmit data to an electronic tag. PIE encoding is an encoding method in which "0" and " 1" have different time intervals, and is based on a continuous pulse with a fixed interval that may have different repetition periods depending on "0" or "1". In general, the duration interval of each binary code is an integer multiple of a clock cycle.

### 3.8 Bi-phase space encoding (FM0)

Bi-phase space encoding (FM0) is an encoding method for electronic tags to transmit data to readers. The rule of encoding with FM0 is that symbol "0" corresponds to level transitions occurring at the middle and at an edge of time and symbol "1" only corresponds to level transition occurring at an edge of time.

FM0 may have the following characteristics:
1. Symbol "0" has 3 transitions, including one transition at a start bit of a bit time and one transition at a middle bit of the bit time;
2. Symbol " 1" has 1 transition at a start bit of a bit time.

In some scenarios, based on power source and usage of zero-power-consumption terminals, zero-power-consumption terminals may be categorized into the following types:

### 1. Passive zero-power-consumption terminal

Zero-power-consumption terminals (e.g., tags in an RFID system) do not require built-in batteries. When a zero-power-consumption terminal approaches a network device (e.g., a reader in an RFID system), the zero-power-consumption terminal is located within a near-field formed by radiation of antennas of the network device. Therefore, antennas of the zero-power-consumption terminal generates an induced current through electromagnetic induction, and the induced current drives a low-power-consumption chip circuit of the zero-power-consumption terminal, thereby implementing operations such as demodulating a forward link signal, and modulating a reverse link signal. For a backscatter link, the zero-power-consumption terminal uses an implementation of backscatter to transmit signals.

It can be seen that the passive zero-power-consumption terminal does not require a built-in battery to drive either a forward link or a reverse link, and is a true zero-power-consumption terminal.

The passive zero-power-consumption terminal does not require batteries, and the radio frequency circuit and baseband circuit are very simple. For example, the passive zero-power-consumption terminal does not require devices such as low-noise amplifiers (LNA), power amplifiers (PA), crystal oscillators, and analog-to-digital converters (ADC), and thus has many advantages such as small size, light weight, very low price, and a long service life.

### 2. Semi-passive zero-power-consumption terminal

The semi-passive zero-power-consumption terminal itself does not have a conventional battery installed, but can use an RF power harvesting module to harvest radio wave power and store the harvested power in a power storage unit (e.g., a capacitor). After the power storage unit obtains power, the power may drive a low-power-consumption chip circuit of the zero-power-consumption terminal, thereby implementing operations such as demodulating a forward link signal and modulating a reverse link signal. For a backscatter link, the zero-power-consumption terminal uses an implementation of backscatter to transmit signals

It can be seen that the semi-passive zero-power-consumption terminal does not require a built-in battery to drive either the forward link or the reverse link. Although power stored in capacitors is used in operation, the power comes from radio power collected by the power harvesting module. Therefore, the semi-passive zero-power-consumption terminal is also a true zero-power-consumption terminal.

The semi-passive zero-power-consumption terminal inherits many advantages of the passive zero-power-consumption terminal, so the semi-passive zero-power-consumption terminal has many advantages such as small size, light weight, very low price and a long service life.

### 3. Active zero-power-consumption terminal

The zero-power-consumption terminal used in some scenarios may also be an active zero-power-consumption terminal, and such a terminal may have a built-in battery. The battery is used to drive a low-power chip circuit of the zero-power-consumption terminal, thereby implementing operations such as demodulating a forward link signal and modulating a reverse link signal. However, for a backscatter link, the zero-power-consumption terminal uses an implementation of backscatter to transmit signals. Therefore, the zero power consumption of such a terminal is mainly embodied in that signal transmission of the reverse link does not need the terminal's own power, but uses backscatter.

### II. Cellular passive Internet of Things

With the increase in 5G industry applications, the types of connected objects and application scenarios are increasing, and there will be higher requirements on the cost and power consumption of communication terminals. The application of battery-free, low-cost passive Internet of Things devices will become a key technology for cellular Internet of Things, which may enrich the types and number of terminals linked to the 5G network and truly realize interconnection of everything. Passive Internet of Things devices may be based on zero-power-consumption communication technology, e.g., RFID technology, and may be extended on this basis to be suitable for cellular Internet of Things.

To facilitate understanding of the embodiments of the present application, power supply signals, scheduling signals and carrier signals related to zero-power-consumption communication will be explained.

### 1. Power supply signal

The power supply signal is a power source from which a zero-power-consumption terminal harvests power.

In terms of carrier of the power supply signal, the carrier may be a base station, a smart phone, a smart gateway, a charging station, a micro base station, or the like.

In terms of frequency band, the frequency band of radio waves used for power supply may be a low frequency band, an intermediate frequency band, or a high frequency band.

In terms of waveform, the radio waves used for power supply may be sine waves, square waves, triangle waves, pulses, rectangular waves, or the like.

In addition, the power supply signal may be a continuous wave or a non-continuous wave (that is, a certain period of interruption is allowed).

Optionally, the power supply signal may be an existing signal in 3GPP standards, such as a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), a physical broadcast channel (PBCH). Alternatively, the power supply signal may be a WIFI signal or a Bluetooth signal.

Optionally, the power supply signal may also be implemented by a newly added signal, e.g., a newly added signal dedicated to power supply.

### 2. Trigger signal, also called scheduling signal

The trigger signal is used to trigger or schedule a zero-power-consumption terminal to transmit data.

In terms of carrier of the trigger signal, the carrier may be a base station, a smart phone, a smart gateway, or the like.

In terms of frequency band, the radio waves used for triggering or scheduling may have a low frequency, an intermediate frequency, a high frequency, or the like.

In terms of waveform, the radio waves used for triggering or scheduling may be sine waves, square waves, triangle waves, pulses, rectangular waves, or the like.

In addition, the trigger signal may be a continuous wave or a non-continuous wave (that is, a certain period of interruption is allowed).

Optionally, the trigger signal may be an existing signal in 3GPP standards, such as a SRS, a PUSCH, a PRACH, a PUCCH, a PDCCH, a PDSCH, a PBCH, a WIFI signal, or a Bluetooth signal.

Optionally, the trigger signal may also be implemented by a newly added signal, e.g., a newly added signal dedicated to triggering or scheduling.

### 3. Carrier signal

The carrier signal is used for a zero-power-consumption terminal to generate a backscatter signal. For example, the zero-power-consumption terminal may modulate a received carrier signal according to information that needs to be sent to form a backscatter signal.

In terms of carrier of the carrier signal, the carrier may be a base station, a smart phone, a smart gateway, or the like.

In terms of frequency band, a radio wave used as the carrier signal may have a low frequency, an intermediate frequency, a high frequency, or the like.

In terms of waveform, the radio wave used as the carrier signal may be a sine wave, a square wave, a triangle wave, a pulse, a rectangular wave, or the like.

In addition, the carrier signal may be a continuous wave or a non-continuous wave (that is, a certain period of interruption is allowed).

Optionally, the carrier signal may be an existing signal in 3GPP standards, such as a SRS, a PUSCH, a PRACH, a PUCCH, a PDCCH, a PDSCH, a PBCH, a WIFI signal, or a Bluetooth signal.

Optionally, the carrier signal may also be implemented by a newly added signal, e.g., a newly added carrier signal dedicated to generating a backscatter signal.

It should be noted that in the embodiments of the present application, the power supply signal, the scheduling signal and the carrier signal may be the same signal or different signals. For example, the power supply signal may be used as the carrier signal, and the scheduling signal may also be used as the carrier signal.

To facilitate understanding of the technical solutions of the embodiments of the present application, radio resource management (RRM) involved in the present application will be described.

For wireless mobile communication systems, accurate measurements of cell quality and beam quality are the basis for their effective execution of wireless resource management and mobility management. For NR systems, two major types of reference signals are currently considered as measurement reference signals, namely synchronization signal block (SSB) and channel state information reference signal (CSI-RS).

SSB measurement timing configuration (SMTC), which is an important concept newly introduced in NR measurement configuration, is time domain resource configuration information for SSB measurement, and is mainly used to configure a set of measurement time windows based on SSB measurement. Parameters of the window such as size, position, and period may be adjusted by configuring parameters. An example is shown in FIG. 6.

In some embodiments, a set of SMTCs may be configured for each measurement frequency. The set of SMTC configurations corresponding to the measurement frequency is used to indicate information of available measurement window(s) at the measurement frequency.

In some scenarios, a terminal device performs relaxed measurements. For example, in order to match different SSB periods of different cells, it is permitted to configure two sets of SMTC parameters for measurement of a given cell during intra-frequency measurements performed in a connected state. For example, besides basic SMTC configuration, a set of dense measurement windows may be configured to be used by a serving cell and cells indicated by a specific cell list.

In some scenarios, for measurements performed in an idle state, the maximum number of SMTC configurations on each frequency is expanded to two to further meet the flexibility of network operations.

In addition, a higher layer signaling may indicate specific configuration information of a specific measurement reference signal through a reference signal configuration (ReferenceSignalConfig) parameter. For SSB-based measurements, to-be-measured SSB indication (ssb-ToMeasure) uses a bit map to indicate position information of SSB(s) actually sent in an SSB burst set. The terminal device may clearly know, according to ssb-ToMeasure, at which SSB candidate positions SSBs were actually sent and at which SSB candidate positions SSB(s) were not sent. At the positions where the SSBs were not sent, the terminal device does not need to perform measurement, thereby realizing power saving of the terminal device.

For CSI-RS based measurements, a base station may configure one or more CSI-RS resources through a higher layer signaling for the terminal device to perform measurements. Firstly, taking a cell as the unit, the higher layer signaling may provide a cell-level CSI-RS parameter configuration, including information such as a cell ID, measurement bandwidth of the cell, or resource density. In addition, since each cell may be configured with a plurality of CSI-RS resources, the CSI-RS parameter configuration may further provide resource-level configuration information of each CSI-RS, such as a specific CSI-RS index, information of time domain positions and frequency domain positions that are occupied by a CSI-RS resource, and a sequence generation manner.

To facilitate understanding of the technical solutions of the embodiments of the present application, mobility management involved in the present application will be explained.

In NR systems, the mobility management of a terminal device mainly includes cell selection and cell reselection processes in RRC idle (RRC_IDLE) or RRC inactive (RRC_INACTIVE) state and switching process of a UE in a connected state.

### 1. Mobility management in RRC_IDLE state or RRC_INACTIVE state.

For a terminal device in RRC_IDLE or RRC_INACTIVE state, the premise for residing in a cell is that the signal quality of the cell (including measurement results of reference signal received power (RSRP) and reference signal received quality (RSRQ)) meets the cell selection S criterion. After selecting a suitable cell, the terminal device will continue to evaluate cell reselection, and measurements that need to be performed for evaluating cell reselection are divided and performed according to a reselection priority of each frequency.

For example, for a frequency with higher priority, neighbor cell measurements are always performed.

In another example, for an intra frequency, in the case where RSRP value and RSRQ value of the serving cell are both higher than an intra-frequency measurement threshold configured by network, the terminal device may stop intra-frequency neighbor cell measurements, otherwise it needs to perform measurements.

In still another example, for a frequency with equal priority and a frequency with lower priority, in the case where RSRP value and RSRQ value of the serving cell are higher than an inter-frequency measurement threshold configured by network, the terminal device may stop neighbor cell measurements on the frequency with equal priority and the frequency with lower priority, otherwise it needs to perform measurements.

After a plurality of candidate cells are determined through measurements, the process of determining a target cell for cell reselection may be based on a principle of prioritizing the reselection of cells on frequencies with higher priorities.

For example, for cell reselection on a frequency with higher priority, it is required that signal quality of a cell should be higher than a certain threshold for a specified time period, and the terminal device should camp on the source cell for a period of time not less than 1 second.

In another example, for cell reselection on an intra frequency and a frequency with equal priority, R criteria (sorted by RSRP) should be met, in which a new cell has better signal quality than the current cell for a specified time period, and the terminal device should camp on the source cell for a period of time not less than 1 second.

In still another example, for cell reselection on a frequency with lower priority, it is required that no cells on the frequencies with higher priorities or equal priorities meet requirements, the signal quality of the source cell should be lower than a certain threshold, the signal quality of cells on the frequencies with lower priorities should be higher than a certain threshold for a specified time period, and the terminal device should camp on the source cell for a period of time not less than 1 second.

During cell reselection on intra frequencies and frequencies with equal priorities, when a plurality of candidate cells meet requirements, in LTE systems, the terminal device may select the best cell as the target cell for reselection by RSRP sorting. Considering that the terminal device in NR systems accesses a cell through beams, in order to increase the probability of the terminal device successfully accessing the cell through a good beam during the access procedure, it is necessary to consider both the signal quality of a cell and the number of good beams when determining the target cell. To achieve this goal, in NR systems, before selecting the target cell, the terminal device first selects several cells with similar and best signal quality, and then selects the cell with the highest number of good beams as the target cell.

### 2. Mobility management in connected state

Mobility management of a UE in connected state is mainly achieved through a handover procedure controlled by network. In NR systems, the handover procedure mainly includes three phases: handover preparation, handover execution and handover completion.

In the handover preparation phase, after receiving a measurement report sent by a UE, a source base station may make a handover decision and initiate a handover request to a target base station. If the target cell accepts the request, it will send a handover response message to the source base station over an interface between base stations. The message includes configuration information of the target cell, i.e., a handover command.

In the handover execution phase, the source base station sends a handover command to the UE. After receiving the handover command, the UE disconnects from the source cell and starts to establish downlink synchronization with the target cell, and then uses random access resources configured in the handover command to initiate a random access procedure to the target cell and reports a handover completion message after random access is completed. During the access procedure of the UE to the target cell, the source base station forwards data packets sent by user plane function (UPF) to the target base station, and sends state information for transmitting and receiving uplink and downlink data packets in the source cell before forwarding to the target base station.

In the handover completion phase, the target base station sends a path switching request to access and mobility management function (AMF) to request AMF to switch a data packet transmission path from UPF to access network to the target base station side. Once AMF responds to the request, it indicates that the path switching is successful, and the target base station may instruct the source base station to release the UE's context information. At this point, the entire connection of UE is switched to the target cell.

To facilitate understanding of the technical solutions of the embodiment of the present application, RRM measurement relaxation mechanisms involved in the present application will be explained.

A terminal device in a non-connected state needs to perform RRM measurements for a serving cell and other neighbor cells based on a configuration from a network device to support mobility operation such as cell reselection.

In some scenarios, for the sake of power saving of terminals, in the case where the terminal device has good channel quality in the serving cell, the terminal device may not initiate RRM measurements for intra frequencies and inter or inter-technology frequencies with equal or lower priorities. In addition, for RRM measurements on inter or inter-technology frequencies with higher priorities, the measurement interval may be increased.

For example, in the case where RSRP of the terminal device on the serving cell is higher than a configured intra-frequency RSRP threshold (i.e., SIntraSearchP, configured through higher-layer parameters) and RSRQ of the terminal device on the serving cell is higher than an intra-frequency RSRQ threshold (i.e., SIntraSearchQ, configured through higher-layer parameters), the terminal device may not initiate RRM measurements for neighbor cells on the intra frequencies.

In another example, in the case where the RSRP of the terminal device on the serving cell is higher than an inter-frequency RSRP threshold (i.e., SnonIntraSearchP, configured through higher-layer parameters) and the RSRQ of the terminal device on the serving cell is higher than an inter-frequency RSRQ threshold (i.e., SnonIntraSearchQ, configured through higher-layer parameters), the terminal device may not initiate RRM measurements for neighbor cells on inter or inter-system frequencies with lower or equal priorities. In addition, for inter or inter-system frequencies with higher priorities, the terminal device may initiate relaxed RRM measurements.

For terminal devices that need to perform RRM measurements of neighbor cells, a set of RRM measurement relaxation mechanisms for neighbor cells may be introduced to further meet power saving needs of terminals.

In some scenarios, two sets of measurement relaxation criteria are introduced for RRM measurements performed by terminal devices in the non-connected state, which are "terminal not at cell edge" criterion and "low mobility" criterion. The two sets of criteria are evaluated based on "cell-level" measurement results on the serving cell of the terminal device.

### 1. "Terminal not at cell edge" criterion

According to this criterion, an RSRP threshold is configured by a network device and an RSRQ threshold may also be configured by the network device. In the case where RSRP of a terminal device on a serving cell is greater than the RSRP threshold and the RSRQ threshold is configured by the network device, if RSRQ of the terminal device on the serving cell is greater than the RSRQ threshold, the terminal device is considered to meet the "terminal not at cell edge" criterion.

The RSRP threshold configured by the network device for the "terminal not at cell edge" criterion should be smaller than SIntraSearchP and SnonIntraSearchP. If the RSRQ threshold is also configured by the network device for the "terminal not at cell edge" criterion, the RSRQ threshold for the "terminal not at cell edge" criterion should be smaller than SIntraSearchQ and SnonIntraSearchQ.

### 2. "Low mobility" criterion

For this criterion, an evaluation time period of RSRP variation (denoted as a first evaluation time period threshold, i.e., TSearchDeltaP) and an RSRP variation threshold (denoted as a first RSRP variation threshold, i.e., SSearchDeltaP) are configured by the network device. As shown in FIG. 7, if RSRP variation of the terminal device on the serving cell within a time period TSearchDeltaP is less than SSearchDeltaP, the terminal device is considered to meet the "low mobility" criterion.

In some scenarios, the "low mobility" criterion is enhanced, for example, by introducing a second evaluation time period threshold and a second RSRP evaluation threshold to support further relaxation (embodied by a larger scaling factor) of measurement for low mobility scenarios (such as stationary terminals or quasi-stationary terminals).

After completing cell selection or reselection, the terminal device needs to perform normal RRM measurements for at least a time period TSearchDeltaP.

For RRM measurements on frequencies with equal or lower priorities, RRM measurement relaxation methods are defined for different RRM measurement relaxation criteria.

For example, if the terminal device meets the "low mobility" criterion, the terminal device uses a longer measurement interval when performing RRM measurements for neighbor cells. For example, a fixed scaling factor is used to increase the measurement interval.

In another example, if the terminal device meets the "terminal not at cell edge" criteria, the terminal device uses a longer measurement interval when performing RRM measurements for neighbor cells. For example, a fixed scaling factor is used to increase the measurement interval.

In still another example, if the terminal device meets both the "low mobility" criterion and the "terminal not at cell edge" criterion, the terminal device increases the measurement interval for intra frequencies, inter frequencies and inter-technology frequency to 1 hour.

In the related art, RRM measurement not only fulfills the mobility management of terminal devices, but also takes into account the power saving issue due to RRM measurement of terminal devices as much as possible. However, in order to save terminal's power, measurements of the terminal need to be reduced. Therefore, a compromise needs to be made between measurement performance and power saving of the terminal, which cannot be achieved together.

In order to achieve power saving of the terminal, performing a more relaxed measurement may have a negative impact on mobility management. According to the above description, it can be known that a zero-power-consumption receiver has the characteristics of power saving, low complexity and low cost. By utilizing zero-power-consumption communication to assist UE in performing RRM measurement, not only the power consumption of RRM measurement of UE may be reduced, but also the performance of the RRM measurement may be guaranteed. One approach involves using a zero-power-consumption receiver as part of the terminal device to directly substitute a conventional receiver to perform RRM measurement so as to achieve power saving. However, the low complexity character of the zero-power-consumption receiver restricts its ability to perform RRM measurement, for example, whether it is able to perform RSRP measurement, and even the measurement accuracy may be a problem. These may have an impact on mobility management based on RRM measurement.

Therefore, how to guarantee measurement performance of the terminal device and terminal power saving is an issue that needs to be solved urgently.

In order to facilitate understanding of the technical solutions of the embodiments of the present application, the technical solutions of the present application will be described below in detail through specific embodiments. The above related technologies, as optional solutions, can be arbitrarily combined with the technical solutions of the embodiments of the present application, and these combined solutions all fall within the protection scope of the embodiments of the present application. The embodiments of the present application include at least part of the following content.

FIG. 8 is a schematic diagram of a wireless communication method 200 according to the embodiments of the present application. As shown in FIG. 8, the method 200 includes at least part of the following content.

In S210, a terminal device receives target signal(s) sent by at least one reference device in a set of reference devices.

In S220, the terminal device determines a target measurement manner for performing radio resource management (RRM) according to the target signal(s) sent by the at least one reference device in the set of reference devices, where the target signal(s) are transmitted over zero-power-consumption radio interface(s).

It should be noted that, in the embodiments of the present application, the set of reference devices may be considered as a part of a network device, or the set of reference devices may be considered as independent devices, which is not limited in the present application.

In some embodiments, the zero-power-consumption radio interface may refer to a communication interface used when one side of zero-power-consumption communication is a zero-power-consumption device or a zero-power-consumption receiver.

In some embodiments, the zero-power-consumption communication may include the backscatter communication, or may also include other passive or semi-passive communication methods. The backscatter communication is taken as an example for illustration in the following, but the present application is not limited thereto.

In some embodiments, the zero-power-consumption radio interface may include at least one of the following:
a communication interface of a zero-power-consumption device, a communication interface of a zero-power-consumption receiver, or an interface for receiving a signal sent by a zero-power-consumption device.

In some embodiments, that the target signal(s) are transmitted over the zero-power-consumption radio interface may include:
that the target signal(s) are sent by a zero-power-consumption device, or the target signal(s) are received by a zero-power-consumption receiver (for example, the zero-power-consumption receiver is installed in a terminal device, or the zero-power-consumption receiver is installed in a zero-power-consumption device).

For example, that the target signal(s) are transmitted over the zero-power-consumption radio interface may include:
that terminal device has a zero-power-consumption receiver and the target signal(s) are received by the zero-power-consumption receiver of the terminal device.

As another example, that the target signal(s) are transmitted over the zero-power-consumption radio interface may include:
that the reference device(s) are zero-power-consumption device(s) and the target signal(s) are sent by the zero-power-consumption device(s).

In some embodiments, the target signal(s) may be related signal(s) in the zero-power-consumption communication.

In some embodiments, the target signal(s) may include at least one of power supply signal(s), carrier signal(s), trigger signal(s), or backscatter signal(s).

In some embodiments, the power supply signal(s), the carrier signal(s) and the trigger signal(s) may be the same signal(s), or may be different signals.

For example, a power supply signal may also be used as a carrier signal, or the power supply signal and the carrier signal may be different signals. For example, the power supply signal and the carrier signal are not sent on the same frequency band.

As another example, a carrier signal may also be used as a trigger signal, or the carrier signal and the trigger signal may be different signals. For example, the carrier signal and the trigger signal are not sent on the same frequency band.

In some embodiments, the terminal device may include a first receiver and a second receiver, and power consumption of the first receiver is lower than that of the second receiver. The target signal(s) are received by the terminal device based on the first receiver, and RRM measurement is to be performed by the terminal device based on the second receiver.

In some embodiments, the first receiver is also called a zero-power-consumption receiver or a low-power-consumption receiver.

As mentioned above, the zero-power-consumption device has a limited communication distance, and thus can perform zero-power-consumption communication only within a certain coverage area. In other words, the zero-power-consumption device may be activated or waked up within a certain coverage area only. Thus, the zero-power-consumption device may be used to identify location information.

In some implementations, the zero-power-consumption device may be designed to determine a relative position of a terminal device in the serving cell.

In some implementations, the zero-power-consumption device may also be designed to determine the signal quality of the terminal device in the serving cell.

This is because signal quality of the terminal device in the serving cell is usually related to the relative position of the terminal device in the serving cell. Therefore, the signal quality of the terminal device in the serving cell may be indicated through the zero-power-consumption device.

In some implementations, the zero-power-consumption device may also be designed as a measurement manner for the terminal device to perform RRM.

Since the measurement manner for the terminal device to perform RRM may be determined based on the signal quality of the terminal device in the serving cell, and the zero-power-consumption device may be used to indicate the signal quality of the terminal device in the serving cell, the zero-power-consumption device may also be used to determine the measurement manner for the terminal device to perform RRM.

In some embodiments, reference devices in the set of reference devices support zero-power-consumption communication.

In some embodiments, the set of reference devices include at least one zero-power-consumption device and/or at least one control node.

In some embodiments, the zero-power-consumption device may use a carrier signal to perform backscatter communication. Since the zero-power-consumption device has a limited communication distance, only when a distance between the zero-power-consumption device and the terminal device is within a certain range, the backscatter signal sent by the zero-power-consumption device can be received by the terminal device. Therefore, the terminal device may determine the target measurement manner for performing RRM according to the received backscatter signal.

In some embodiments, in the case where the set of reference devices include at least one control node, the terminal device may include a zero-power-consumption device receiver. When the distance between the terminal device and the control node is within a certain range, a signal sent by the control node may activate or wake up the zero-power-consumption receiver in the terminal device. Therefore, the terminal device may determine the target measurement manner for performing RRM based on the signal received from the control node.

In some embodiments, reference devices in the set of reference devices may be used to determine at least one of the following:
location information of the terminal device in the serving cell;
a target measurement manner for the terminal device to perform RRM;
signal quality of the terminal device in the serving cell; or
whether the signal quality of the terminal device in the serving cell meets a signal quality threshold.

For example, a signal sent by the reference device in the set of reference devices (i.e., a target signal) is used to determine at least one of the following:
location information of the terminal device in the serving cell;
a target measurement manner for the terminal device to perform RRM;
signal quality of the terminal device in the serving cell; or
whether the signal quality of the terminal device in the serving cell meets a signal quality threshold.

That is, according to a received target signal, the terminal device can determine at least one of the location information of the terminal device in the serving cell, the target measurement manner for performing RRM, the signal quality of the terminal device in the serving cell, and whether the signal quality of the terminal device in the serving cell meets the signal quality threshold.

In some embodiments, in the case where the terminal device receives a plurality of target signals, according to the plurality of target signals, the terminal device may also determine at least one of the following:
a change in location of the terminal device in the serving cell;
a target measurement manner for the terminal device to perform RRM;
a variation in signal quality of the terminal device in the serving cell; or
whether the variation in signal quality of the terminal device in the serving cell meets a signal quality threshold.

Therefore, in the embodiments of the present application, the terminal device may use zero-power-consumption communication to determine the target measurement manner for performing RRM. In this way, the terminal device may not need to perform measurement on the reference signal (e.g., an SSB or a CSI-RS), which is conducive to achieving power saving of the terminal device.

In some embodiments, the location information of the terminal device in the serving cell may include whether the terminal device is at cell edge.

In some embodiments, the target measurement manner for the terminal device to perform RRM may include whether the terminal device performs RRM measurement on neighbor cells, or whether the terminal device performs relaxed RRM measurement on neighbor cells; or may include relaxation degree for the terminal device to perform relaxed RRM measurement on neighbor cells. For example, different relaxation degrees may correspond to different evaluation time period thresholds and/or signal quality thresholds.

As an example and not by way of limitation, the measurement manner for the terminal device to perform RRM may include at least one of the following:
that the terminal device does not perform RRM measurement;
that the terminal device performs relaxed RRM measurement; or
that the terminal device performs RRM measurement, or in other words, performs general RRM measurement without relaxing RRM measurement.

In some embodiments, a determination condition for the terminal device to perform relaxed RRM measurement may include but is not limited to:
the signal quality of the terminal device in the serving cell meets the signal quality threshold; or
a variation in signal quality of the terminal device in the serving cell meets a signal quality variation threshold.

In some embodiments, the signal quality threshold may refer to a signal quality threshold for relaxing RRM measurement.

For example, if the signal quality of the terminal device in the serving cell meets the signal quality threshold, the relaxed RRM measurement is to be performed, or no RRM measurement is to be performed.

As another example, if the signal quality of the terminal device in the serving cell does not meet the signal quality threshold, the RRM measurement is not to be relaxed, or in other words, the RRM measurement is to be performed.

In some embodiments, the signal quality threshold may include but is not limited to an RSRP threshold and/or an RSRQ threshold.

In some embodiments, that the signal quality of the terminal device in the serving cell meets the signal quality threshold may include:
RSRP of the terminal device in the serving cell is higher than the RSRP threshold; and/or
RSRQ of the terminal device in the serving cell is higher than the RSRQ threshold.

In some embodiments, the RSRP threshold is configured by a network device.

In some embodiments, the RSRQ threshold is configured by a network device.

Optionally, signal quality thresholds may be used to distinguish between different relaxation degrees, and different relaxation degrees may be determined using corresponding signal quality thresholds.

In some embodiments, the signal quality variation threshold may refer to a signal quality variation threshold used to relax RRM measurement.

In some embodiments, the signal quality variation threshold may include but is not limited to an RSRP variation threshold and/or an RSRQ variation threshold.

In some embodiments, that the variation in signal quality of the terminal device in the serving cell meets the signal quality variation threshold may include:
that a variation in RSRP of the terminal device in the serving cell during a first time period is less than the RSRP variation threshold; and/or
that a variation in RSRQ of the terminal device in the serving cell during the first time period is less than an RSRQ variation threshold.

In some embodiments, the first time period is an evaluation time period threshold, and the first time period may be configured by a network device.

Optionally, signal quality variation thresholds may be used to distinguish between different relaxation degrees, and different relaxation degrees may be determined using corresponding signal quality variation thresholds.

Optionally, evaluation time period thresholds may be used to distinguish between different relaxation degrees, and different relaxation degrees may be determined using corresponding evaluation time period thresholds.

In some embodiments, deployment locations of reference devices in the set of reference devices may be determined according to signal qualities of the terminal device at different locations in the serving cell (which are obtained according to measurement of reference signals).

For example, a plurality of signal quality ranges may be determined according to the signal qualities of the terminal device at different locations in the serving cell, and one or more reference devices may be deployed in an area corresponding to each signal quality range. The one or more reference devices may be used to indicate the signal quality range (which may be represented by a specific signal quality value, and the specific signal quality value may be an average value, a maximum value, or a minimum value of the signal quality range), or may be used to indicate an area corresponding to the signal quality range.

As an example, the plurality of signal quality ranges may include a first signal quality range and a second signal quality range. The first signal quality range represents a signal quality range that meets a signal quality threshold, and the second signal quality range is a signal quality range that does not meet the signal quality threshold. For example, in areas corresponding to the first signal quality range and the second signal quality range, one reference device is deployed. If the terminal device receives a target signal sent by the reference device in the area corresponding to the first signal quality range, it may be considered that the signal quality of the terminal device in the serving cell falls within the first signal quality range, that is, the signal quality of the terminal device in the serving cell meets the signal quality threshold.

In some embodiments, reference devices in the set of reference devices are deployed at cell edge, such as the edge of the serving cell or the edge of neighbor cells.

Optionally, a reference device deployed at cell edge may be used to determine whether the terminal device is at cell edge.

For example, if the terminal device receives a target signal sent by a reference device deployed at cell edge, it may be determined that the terminal device is currently at cell edge.

In some embodiments of the present application, the target signal may include indication information, and according to the indication information included in the target signal, the terminal device determines location information of the terminal device in the serving cell, information related to the signal quality of the terminal device in the serving cell (e.g., a specific signal quality value, or whether the signal quality meets a signal quality threshold), or the target measurement manner for the terminal device to perform RRM measurement. That is, the target signal may indicate the above information explicitly.

In some other embodiments, the terminal device may determine, according to resources for a target signal (e.g., time domain resources and/or frequency domain resources), a modulation manner of the target signal, etc., location information of the terminal device in the serving cell, information related to the signal quality of the terminal device in the serving cell (e.g., a specific signal quality value, or whether the signal quality meets a signal quality threshold), or the target measurement manner for the terminal device to perform RRM measurement. For example, reference devices at different locations may use different resources to send target signals, or reference devices indicating different signal quality may use different resources to send target signals,

The following will describe specific implementations for the terminal device to determine the target measurement manner for performing RRM according to a target signal.

Manner 1: the target signal includes first indication information for indicating whether the signal quality of the terminal device in the serving cell meets the signal quality threshold.

For example, the reference device may modulate an original signal (e.g., a sine wave signal, or a square wave signal) to obtain a target signal carrying the first indication information.

In some embodiments of the present application, S220 may include:
determining whether the signal quality of the terminal device in the serving cell meets the signal quality threshold according to first indication information included in the received target signal; and
determining the target measurement manner for performing RRM according to whether the signal quality of the terminal device in the serving cell meets the signal quality threshold.

For example, the set of reference devices include a plurality of reference devices, and the plurality of reference devices are all capable of sending a target signal carrying the first indication information. In the case where the terminal device approaches a first reference device of the plurality of reference devices, the terminal device may receive a target signal sent by the first reference device, and thus determine whether the signal quality of the terminal device in the serving cell meets the signal quality threshold according to the first indication information included in the target signal.

Optionally, in the case where the first reference device is deployed at the edge of the serving cell, the first indication information is used to indicate that the signal quality of the terminal device in the serving cell does not meet the signal quality threshold.

Optionally, in the case where the first reference device is deployed in a central area of the serving cell, the first indication information is used to indicate that the signal quality of the terminal device in the serving cell does not meet the signal quality threshold.

In some embodiments, the set of reference devices include a first set of reference devices and a second set of reference devices. The first set of reference devices include one or more reference devices, and the second set of reference devices include one or more reference devices. The first indication information carried in target signals sent by reference devices in the first set of reference devices is used to indicate that the signal quality of the terminal device in the serving cell meets the signal quality threshold, and the first indication information carried in target signals sent by reference devices in the second set of reference devices is used to indicate that the signal quality of the terminal device in the serving cell does not meet the signal quality threshold.

Optionally, a first signal quality range and a second signal quality range may be determined according to signal qualities of the terminal device at different locations in the serving cell (e.g., RSRP or RSRQ measurement results of reference signals obtained by the terminal device), the first signal quality range represents a signal quality range that meets the signal quality threshold, and the second signal quality range is a signal quality range that does not meet the signal quality threshold. Further, the first set of reference devices are deployed in an area corresponding to the first signal quality range, and the second set of reference devices are deployed in an area corresponding to the second signal quality range. Thus, the first indication information carried in target signals sent by reference devices in the first set of reference devices may be used to indicate that the signal quality meets the signal quality threshold, and the first indication information carried in target signals sent by reference devices in the second set of reference devices may be used to indicate that the signal quality does not meet the signal quality threshold.

In some embodiments, if the first indication information indicates that the signal quality of the terminal device in the serving cell meets the signal quality threshold, the terminal device determines not to perform RRM measurement on neighbor cells, or determines to perform relaxed RRM measurement on neighbor cells.

In some other embodiments, if the first indication information indicates that the signal quality of the terminal device in the serving cell does not meet the signal quality threshold, the terminal device determines to perform RRM measurement on neighbor cells, or in other words, performs general RRM measurement.

Manner 2: the target signal includes second indication information for indicating the signal quality of the terminal device in the serving cell.

Optionally, the second indication information is used to indicate a specific RSRP value and/or RSRQ value.

Optionally, the second indication information is used to indicate an RSRP range and/or an RSRQ range.

In some embodiments, the reference device may modulate an original signal (e.g., a sine wave signal, or a square wave signal) to obtain a target signal carrying the second indication information.

In some embodiments of the present application, S220 further includes:
determining the signal quality of the terminal device in the serving cell according to second indication information included in the received target signal; and
determining the target measurement manner for performing RRM according to whether the signal quality of the terminal device in the serving cell meets a signal quality threshold.

For example, the set of reference devices include a plurality of reference devices, and the plurality of reference devices are all capable of sending a target signal carrying second indication information. In the case where the terminal device approaches a second reference device of the plurality of reference devices, the terminal device may receive a target signal sent by the second reference device, and thus determine the signal quality of the terminal device in the serving cell according to the second indication information included in the target signal.

Optionally, signal quality indicated by second indication information carried in a target signal sent by a reference device deployed at the edge of the serving cell is lower than signal quality indicated by second indication information carried in a target signal sent by a reference device deployed in the central area of the serving cell.

In some embodiments, the set of reference devices include a plurality gourps of reference devices, each of which includes one or more reference devices, and second indication information carried in target signals sent by reference devices in each goup of reference devices is used for indicating a signal quality range or a specific signal quality value.

Optionally, a plurality of signal quality ranges may be determined according to signal qualities of the terminal device at different locations in the serving cell. Further, in an area corresponding to each signal quality range, a corresponding group of reference devices are deployed, and thus, second indication information carried in a target signal sent by a reference device in the group of reference devices may be used for indicating a signal quality range or a specific signal quality value. The signal quality value may be an average value, a maximum value, or a minimum value of the signal quality range.

In some embodiments, if it is determined that the signal quality threshold is met according to the signal quality of the terminal device in the serving cell as indicated by the second indication information, the terminal device determines not to perform RRM measurement on neighbor cells, or determines to perform relaxed RRM measurement on neighbor cells.

In some other embodiments, if it is determined that the signal quality threshold is not met according to the signal quality of the terminal device in the serving cell as indicated by the second indication information, the terminal device determines to perform RRM measurement on neighbor cells, or in other words, perform non-relaxed RRM measurement, or in other words, perform general RRM measurement.

In some other embodiments, S220 further includes:
determining a variation in signal quality of the terminal device in the serving cell according to second indication information included in each of a plurality of target signals received within a first time period; and
determining the target measurement manner for performing RRM according to whether the variation in signal quality of the terminal device in the serving cell meets a signal quality variation threshold.

For example, the set of reference devices include a plurality of reference devices, and the plurality of reference devices are all capable of sending a target signal carrying the second indication information. In the case where the terminal device approaches a third reference device and a fourth reference device of the plurality of reference devices successively during the first time period, the terminal device may receive target signals sent by the third reference device and the fourth reference device, and thus, the terminal device can determine two signal qualities of the terminal device in the serving cell according to second indication information included in the two target signals, and thus determine a variation in signal quality of the terminal device in the serving cell according to a variation between the two signal qualities.

For example, if the variation in signal quality of the terminal device in the serving cell meets the signal quality variation threshold, it is determined not to perform RRM measurement on neighbor cells, or to perform relaxed RRM measurement on neighbor cells.

As another example, if the variation in signal quality of the terminal device in the serving cell does not meet the signal quality variation threshold, it is determined to perform RRM measurement on neighbor cells, or to perform general RRM measurement on neighbor cells.

In some embodiments, that a variation in the signal quality of the terminal device in the serving cell meets the signal quality variation threshold indicates that the terminal device meets low mobility.

Manner 3: the target signal includes third indication information for indicating identification information of a reference device sending the target signal.

Therefore, the terminal device determines the reference device for sending the target signal according to the third indication information included in the received target signal.

In some embodiments, a reference device may be used to determine at least one of the following information:
location information of the terminal device in the serving cell;
channel quality of the terminal device in the serving cell;
the target measurement manner for the terminal device to perform RRM on a neighbor cell; or
whether the signal quality of the terminal device in the serving cell meets the signal quality threshold.

For example, a reference device has a correspondence with at least one of the location information of the terminal device in the serving cell, the channel quality of the terminal device in the serving cell, or whether the signal quality of the terminal device in the serving cell meets the signal quality threshold.

Therefore, according to the correspondence, the terminal device may determine at least one of the location information of the terminal device in the serving cell, the channel quality of the terminal device in the serving cell, or whether the signal quality of the terminal device in the serving cell meets the signal quality threshold, after determining the reference device for sending the target signal according to the third indication information.

Manner 3-1: reference devices in the set of reference devices have a first correspondence with whether the signal qualities of the terminal device in the serving cell meet the signal quality threshold.

Therefore, according to third indication information in a received target signal, the terminal device may determine a reference device for sending the target signal, and determine whether the signal quality of the terminal device in the serving cell meets the signal quality threshold according to the first correspondence.

Optionally, the first correspondence may be a correspondence between identification information of reference devices and whether signal qualities meet a signal quality threshold.

In some embodiments, the first correspondence may be configured by a network device, or may be predefined.

Optionally, a first signal quality range and a second signal quality range may be determined according to signal qualities of the terminal device at different locations in the serving cell, the first signal quality range represents a signal quality range that meets the signal quality threshold, and the second signal quality range is a signal quality range that does not meet the signal quality threshold. Further, the first set of reference devices are deployed in an area corresponding to the first signal quality range, and the second set of reference devices are set in an area corresponding to the second signal quality range.

In this case, in the first correspondence, identification information of reference devices in the first set of reference devices all corresponds to that signal qualities meet a signal quality threshold, and identification information of reference devices in the second set of reference devices all corresponds to that signal qualities do not meet the signal quality threshold.

In some embodiments of the present application, S220 may include:
determining, according to third indication information included in a received target signal, identification information of a reference device for sending the target signal;
determining whether the signal quality of the terminal device in the serving cell meets the signal quality threshold according to the identification information of the reference device for sending the target signal and the first correspondence; and
determining the target measurement manner for performing RRM according to whether the signal quality of the terminal device in the serving cell meets the signal quality threshold.

For example, the set of reference devices include a plurality of reference devices, and the plurality of reference devices are all capable of sending a target signal carrying third indication information. In the case where the terminal device approaches a fifth reference device of the plurality of reference devices, the terminal device may receive a target signal sent by the fifth reference device, and then determine to send identification information of the fifth reference device according to the fifth indication information included in the target signal.

Further, according to the first correspondence, it may be determined whether the signal quality of the terminal device in the serving cell meets the signal quality threshold. For example, if it is determined that the signal quality of the terminal device in the serving cell meets the signal quality threshold, no RRM measurement is to be performed on neighbor cells, or relaxed RRM measurement is to be performed on a neighbor cell. As another example, if it is determined that the signal quality of the terminal device in the serving cell does not meet the signal quality threshold, RRM measurement is to be performed on a neighbor cell, or in other words, non-relaxed RRM measurement is to be performed, or general RRM measurement is to be performed.

Manner 3-2: reference devices in the set of reference devices have a second correspondence with signal qualities of the terminal device in the serving cell.

Therefore, according to third indication information in a received target signal, the terminal device may determine a reference device for sending the target signal, and determine the signal quality of the terminal device in the serving cell according to the second correspondence.

Optionally, the second correspondence may be a correspondence between identification information of reference devices and signal qualities (e.g., RSRPs, or RSRQs).

Optionally, in the second correspondence, identification information of a reference device may correspond to a specific signal quality value, or may correspond to a signal quality range, which is not limited in the present application.

In some embodiments, the second correspondence may be configured by a network device, or may be predefined.

Optionally, a plurality of signal quality ranges may be determined according to signal qualities of the terminal device at different locations in the serving cell. Further, in an area corresponding to each signal quality range, a corresponding group of reference devices are deployed.

In this case, in the second correspondence, identification information of reference devices in different groups of reference devices may correspond to different signal quality ranges or different signal quality values, and a signal quality value may be an average value, a maximum value, or a minimum value of the signal quality range.

In some embodiments of the present application, S220 may include:
determining, according to third indication information included in a received target signal, identification information of a reference device for sending the target signal;
determining the signal quality of the terminal device in the serving cell according to the identification information of the reference device for sending the target signal and the second correspondence; and
determining the target measurement manner for performing RRM according to whether the signal quality of the terminal device in the serving cell meets the signal quality threshold.

For example, the set of reference devices include a plurality of reference devices, each of which is capable of sending a target signal carrying third indication information. In the case where the terminal device approaches a sixth reference device of the plurality of reference devices, the terminal device may receive a target signal sent by the sixth reference device, and then determine identification information of the sixth reference device according to the third indication information included in the target signal.

Further, according to the second correspondence, it may be determined whether the signal quality of the terminal device in the serving cell meets the signal quality threshold. For example, if it is determined that the signal quality of the terminal device in the serving cell meets the signal quality threshold, no RRM measurement is to be performed on neighbor cells, or relaxed RRM measurement is to be performed on a neighbor cell. As another example, if it is determined that the signal quality of the terminal device in the serving cell does not meet the signal quality threshold, RRM measurement is to be performed on a neighbor cell, or in other words, non-relaxed RRM measurement is to be performed, or general RRM measurement is to be performed.

In some other embodiments of the present application, S220 may include:
determining, according to third indication information included in each of a plurality of target signals received within a first time period, identification information of a plurality of reference devices;
determining a variation in signal quality of the terminal device in the serving cell according to the identification information of the plurality of reference devices and the second correspondence; and
determining the target measurement manner for performing RRM according to whether the variation in signal quality of the terminal device in the serving cell meets a signal quality variation threshold.

For example, the set of reference devices include a plurality of reference devices, and the plurality of reference devices are all capable of sending a target signal carrying the third indication information. In the case where the terminal device approaches a seventh reference device and an eighth reference device of the plurality of reference devices successively during the first time period, the terminal device may receive target signals sent by the seventh reference device and the eighth reference device, and determine identification information of the seventh reference device and the eighth reference device according to third indication information included in the two target signals. According to the identification information of the seventh reference device and the eighth reference device, in combination with the second correspondence, the terminal device may determine two signal qualities of the terminal device in the serving cell, and then determine the variation in signal quality of the terminal device in the serving cell according to the difference between the two signal qualities.

Manner 3-3: reference devices in the set of reference devices have a third correspondence with target measurement manners for the terminal device to perform RRM.

Optionally, the third correspondence may be a correspondence between identification information of the reference devices and RRM measurement manners.

In some embodiments, the third correspondence may be configured by a network device, or may be predefined.

Optionally, a plurality of signal quality ranges may be determined according to signal qualities of the terminal device at different locations in the serving cell, and different signal quality ranges correspond to different RRM measurement manners. Further, in an area corresponding to each signal quality range, a corresponding group of reference devices are deployed. In this case, in the third correspondence, identification information of reference devices in different groups of reference devices may correspond to different RRM measurement manners.

For example, the plurality of signal quality ranges include a first signal quality range and a second signal quality range. The first signal quality range represents a signal quality range that meets a signal quality threshold, and the second signal quality range is a signal quality range that does not meet the signal quality threshold. The first signal quality range corresponds to a relaxed RRM measurement manner, and the second signal quality range corresponds to a non-relaxed RRM measurement manner.

In some embodiments of the present application, S220 may include:
determining, according to third indication information included in a received target signal, identification information of a reference device for sending the target signal; and
determining the target measurement manner for performing RRM according to the identification information of the reference device for sending the target signal and the third correspondence.

For example, the set of reference devices include a plurality of reference devices, and the plurality of reference devices are all capable of sending a target signal carrying the third indication information. In the case where the terminal device approaches a ninth reference device of the plurality of reference devices, the terminal device may receive a target signal sent by the ninth reference device, and determine identification information of the ninth reference device according to the third indication information included in the target signal. Further, according to the third correspondence, a target measurement manner for the terminal device to perform RRM may be determined.

As an example, if the identification information of the ninth reference device corresponds to not performing RRM measurement, the terminal device does not perform RRM measurement on neighbor cells; or, if the identification information of the ninth reference device corresponds to relaxed RRM measurement, the terminal device performs relaxed RRM measurement on a neighbor cell; or, if the identification information of the ninth reference device corresponds to performing RRM measurement, the terminal device performs RRM measurement on a neighbor cell, or, in other words, performs general RRM measurement.

In some embodiments of the present application, in the case where the terminal device receives target signals sent by a plurality of reference devices, the plurality of target signals may be used for determining at least one of the following information:
a change in location of the terminal device in the serving cell;
a target measurement manner for the terminal device to perform RRM on a neighbor cell;
a variation in signal quality of the terminal device in the serving cell; or
whether the variation in signal quality of the terminal device in the serving cell meets a signal quality threshold.

Manner 3-4: changes in reference devices in the set of reference devices have a fourth correspondence with target measurement manners for the terminal device to perform RRM. The changes in reference devices herein may refer to changes in reference devices corresponding to target signal(s) received by the terminal device.

Optionally, the fourth correspondence may be a correspondence between changes in identification information of reference devices and RRM measurement manners.

In some embodiments, the fourth correspondence may be configured by a network device, or may be predefined.

Optionally, a plurality of signal quality ranges may be determined according to signal qualities of the terminal device at different locations in the serving cell. Further, in an area corresponding to each signal quality range, a corresponding group of reference devices are deployed. Therefore, target signals received by the terminal device from reference devices in different groups of reference devices may reflect a variation in signal quality of the terminal device in the serving cell. For example, different signal quality variation ranges (or a variation of different groups of reference devices) may correspond to different RRM measurement manners.

In some embodiments of the present application, S220 may include:
determining identification information of a plurality of reference devices according to third indication information included in a plurality of target signals received during a first time period; and
determining the target measurement manner for performing RRM according to a change in identification information of the plurality of reference devices and the fourth correspondence.

For example, the set of reference devices include a plurality of reference devices, and the plurality of reference devices are all capable of sending a target signal carrying the third indication information. In the case where the terminal device approaches a tenth reference device and an eleventh reference device of the plurality of reference devices successively during the first time period, the terminal device may receive target signals sent by the tenth reference device and the eleventh reference device, and determine identification information of the tenth reference device and the eleventh reference device according to third indication information included in the two target signals. Further, according to the fourth correspondence, the target measurement manner for the terminal device to perform RRM may be determined.

Manner 3-5: changes in reference devices in the set of reference devices have a fifth correspondence with variations of signal quality of the terminal device in the serving cell. The changes in reference devices herein may refer to changes in reference devices corresponding to target signal(s) received by the terminal device.

Optionally, the fifth correspondence may be a correspondence between changes in identification information of reference devices and variations of signal quality of the terminal device in the serving cell.

In some embodiments, the fifth correspondence may be configured by a network device, or may be predefined.

Optionally, a plurality of signal quality ranges may be determined according to signal qualities of the terminal device at different locations in the serving cell. Further, in an area corresponding to each signal quality range, a corresponding group of reference devices are deployed. Therefore, target signals received by the terminal device from reference devices in different groups of reference devices may reflect a variation in signal quality of the terminal device in the serving cell.

In some embodiments of the present application, S220 may include:
determining identification information of a plurality of reference devices according to third indication information included in a plurality of target signals received during a first time period;
determining a variation in signal quality of the terminal device in the serving cell according to a change in identification information of the plurality of reference devices and the fifth correspondence; and
determining the target measurement manner for performing RRM according to whether the variation in signal quality of the terminal device in the serving cell meets a signal quality variation threshold.

For example, the set of reference devices include a plurality of reference devices, and the plurality of reference devices are all capable of sending a target signal carrying the third indication information. In the case where the terminal device approaches a twelfth reference device and a thirteenth reference device of the plurality of reference devices successively during the first time period, the terminal device may receive target signals sent by the twelfth reference device and the thirteenth reference device, and determine identification information of the twelfth reference device and the thirteenth reference device according to third indication information included in the two target signals.

Further, according to a change from the identification information of the twelfth reference device to the identification information of the thirteenth reference device, a signal quality variation or variation range is determined. A target measurement manner is then determined according to the signal quality variation or variation range and the signal quality variation threshold. For example, if the signal quality variation or variation range is less than the signal quality variation threshold, instead of RRM measurement, the terminal device performs relaxed RRM measurement on a neighbor cell. As another example, if the signal quality variation or variation range is greater than or equal to the signal quality variation threshold, the terminal device performs RRM measurement on a neighbor cell, or in other words, performs general RRM measurement.

Manner 3-6: changes in reference devices in the set of reference devices have a sixth correspondence with whether variations of signal quality of the terminal device in the serving cell meet the signal quality variation threshold. The changes in reference devices herein may refer to changes in reference devices corresponding to target signal(s) received by the terminal device.

Optionally, the sixth correspondence may be a correspondence between changes in identification information of reference devices and whether variations of signal quality of the terminal device in the serving cell meet the signal quality variation threshold.

In some embodiments, the sixth correspondence may be configured by a network device, or may be predefined.

Optionally, a plurality of signal quality ranges may be determined according to signal qualities of the terminal device at different locations in the serving cell. Further, in an area corresponding to each signal quality range, a corresponding group of reference devices are deployed. Therefore, target signals received by the terminal device from reference devices in different group of reference devices may reflect a variation in signal quality of the terminal device in the serving cell.

In some embodiments of the present application, S220 may include:
determining identification information of a plurality of reference devices according to third indication information included in a plurality of target signals received during a first time period;
determining whether a variation in signal quality of the terminal device in the serving cell meets a signal quality variation threshold according to a change in identification information of the plurality of reference devices and the sixth correspondence; and
determining the target measurement manner for performing RRM according to whether the variation in signal quality of the terminal device in the serving cell meets the signal quality variation threshold.

For example, the set of reference devices include a plurality of reference devices, and the plurality of reference devices are all capable of sending a target signal carrying the third indication information. In the case where the terminal device approaches a fourteenth reference device and a fifteenth reference device of the plurality of reference devices successively during the first time period, the terminal device may receive target signals sent by the fourteenth reference device and the fifteenth reference device, and determine identification information of the fourteenth reference device and the fifteenth reference device according to third indication information included in the two target signals.

Further, according to a change from the identification information of the fourteenth reference device to the identification information of the fifteenth reference device, in combination with the sixth correspondence, it is determined whether a variation in signal quality of the terminal device in the serving cell meets the signal quality variation threshold. Further, according to whether the variation in signal quality of the terminal device in the serving cell meets the signal quality variation threshold, a target measurement manner for performing RRM on a neighbor cell may be determined. For example, if the variation in signal quality of the terminal device in the serving cell meets the signal quality variation threshold, instead of RRM measurement, the terminal device performs relaxed RRM measurement on a neighbor cell. As another example, if the variation in signal quality of the terminal device in the serving cell does not meet the signal quality variation threshold, the terminal device performs RRM measurement on a neighbor cell, or in other words, performs general RRM measurement.

Manner 4: the target signal(s) include first control information for indicating a target measurement manner for the terminal device to perform RRM.

Therefore, the terminal device may determine the target measurement manner for performing RRM according to the first control information included in a received target signal.

For example, if the first control information indicates not to perform RRM measurement, the terminal device determines not to perform RRM measurement on a neighbor cell; or, if the first control information indicates to perform relaxed RRM measurement, the terminal device determines to perform relaxed RRM measurement on a neighbor cell; or, if the first control information indicates to perform RRM measurement, the terminal device determines to perform RRM measurement on a neighbor cell.

As an implementation, a plurality of signal quality ranges may be determined according to signal qualities of the terminal device at different locations in the serving cell, and different signal quality ranges correspond to different RRM measurement manners. Further, in an area corresponding to each signal quality range, a group of corresponding reference devices are deployed. Thus, first control information carried in target signals sent by reference devices in different groups of reference devices may indicate different RRM measurement manners.

For example, the plurality of signal quality ranges include a first signal quality range and a second signal quality range. The first signal quality range represents a signal quality range that meets a signal quality threshold, and the second signal quality range is a signal quality range that fails to meet the signal quality threshold. The first signal quality range corresponds to a relaxed RRM measurement manner, and the second signal quality range corresponds to a non-relaxed RRM measurement manner.

In this case, first control information sent by reference devices deployed in the area corresponding to the first signal quality range may indicate relaxed RRM measurement, and first control information sent by reference devices deployed in the area corresponding to the second signal quality range may be used to indicate non-relaxed RRM measurement.

In combination with two typical implementations of reference devices, the following will describe specific implementations of determining the target measurement manner.

Embodiment 1: the set of reference devices include at least one zero-power-consumption device.

In some embodiments, the target signal includes a backscatter signal sent by a zero-power-consumption device.

In some embodiments, the backscatter signal may be obtained by backscattering a carrier signal by the zero-power-consumption device.

In some embodiments, the carrier signal may be sent by a terminal device, a network device or other devices, or may be a radio signal in the environment. The source of the carrier signal is not limit in the present application.

In some embodiments, the backscatter signal is used for determining at least one of the following:
location information of the terminal device in the serving cell;
a target measurement manner for the terminal device to perform RRM;
signal quality of the terminal device in the serving cell; or
whether the signal quality of the terminal device in the serving cell meets a signal quality threshold.

In some embodiments, a change in zero-power-consumption devices corresponding to a plurality of backscatter signals received by the terminal device is used for determining at least one of the following:
location information of the terminal device in the serving cell;
a target measurement manner for the terminal device to perform RRM;
a variation in signal quality of the terminal device in the serving cell; or
whether the variation in signal quality of the terminal device in the serving cell meets a signal quality variation threshold.

As mentioned above, due to the limited communication distance of zero-power-consumption devices, the terminal device can receive the backscatter signal sent by a zero-power-consumption device only when approaching the zero-power-consumption device. Therefore, according to a received backscatter signal, the terminal device may determine the current area where the terminal device is located, signal quality of the terminal device in the serving cell, whether the signal quality meets the signal quality threshold, or the target measurement manner for performing RRM measurement.

In the related art, relaxed RRM measurement of neighbor cells by the terminal device is determined based on RSRP and RSRQ measurement results of a reference signal on a serving cell obtained by the terminal device, which requires the receiver of the terminal device to continuously detect reference signals from the serving cell to determine whether the measurement results meet the signal quality threshold of the relaxed RRM measurement, which is not conducive to power saving of the terminal device.

In contrast, in the embodiments of the present application, the receiver of the terminal device does not need to continuously detect reference signals on the serving cell, but may determine the target measurement manner for performing RRM measurement according to the backscatter signal from the zero-power-consumption device, which is conducive to power saving of the terminal device.

In some embodiments, the set of reference devices include at least one zero-power-consumption device deployed at cell edge.

Optionally, the at least one zero-power-consumption device may be used to determine whether the terminal device is located at cell edge.

For example, as shown in FIG. 9, a group of zero-power-consumption devices are deployed at the edge of each cell.

For example, in the case where the terminal device receives a backscatter signal sent by a zero-power-consumption device deployed at cell edge, the terminal device may determine that the terminal device is located at cell edge.

In some embodiments, a backscatter signal includes edge indication information for indicating that the terminal device is located at cell edge.

Optionally, when the terminal device receives a backscatter signal including the edge indication information, the terminal device is triggered to perform RRM measurement on the neighbor cell.

Optionally, in the case where all the zero-power-consumption devices are deployed at cell edge and the terminal device does not receive any backscatter signal from zero-power-consumption devices (in this case, the terminal device may be considered not at cell edge), the terminal device may not need to perform RRM measurement on a neighbor cell, or relax RRM measurement on a neighbor cell.

In some embodiments, a backscatter signal is further used for indicating at least one of the following:
identification information of a neighbor cell, frequency information of the neighbor cell, or radio access technology (RAT) information of the neighbor cell.

Therefore, the terminal device determines which neighbor cell the terminal device is close to according to the identification information of a neighbor cell included in the backscatter signal, or may determine whether the nearby neighbor cell is an inter-frequency neighbor cell or an intra-frequency neighbor cell according to the frequency information of the neighbor cell, or may determine whether the nearby neighbor cell is an intra-system cell according to the RAT information of the neighbor cell.

In some other embodiments, the set of reference devices include at least one zero-power-consumption device deployed at an edge of a cell and at least one zero-power-consumption device deployed within the cell.

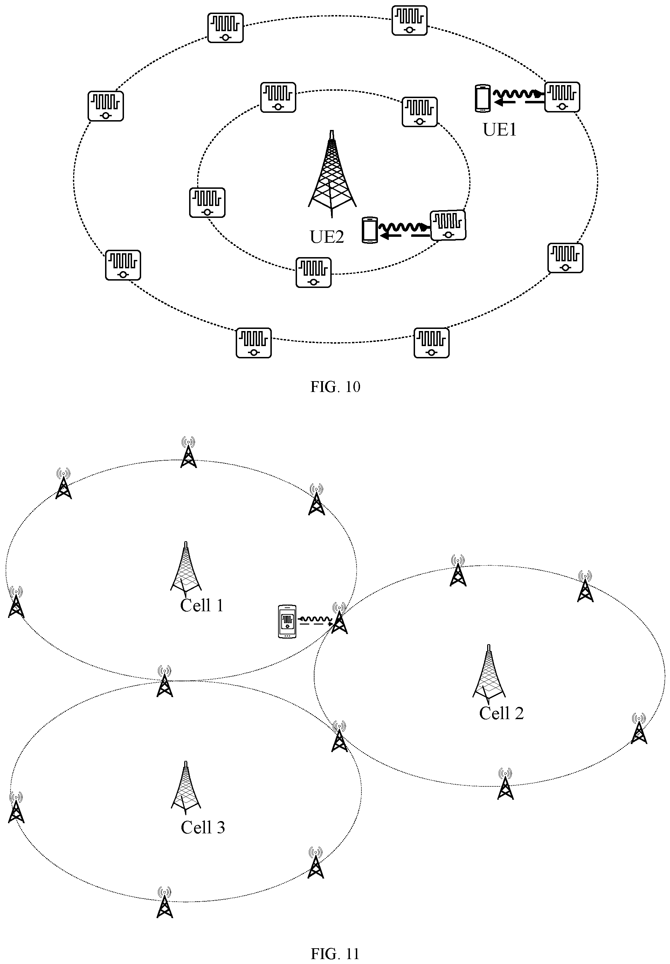

For example, as shown in FIG. 10, a group of zero-power-consumption devices are deployed at an edge of a cell, and another group of zero-power-consumption devices are deployed within the cell.

Optionally, a backscatter signal sent by a zero-power-consumption device deployed at cell edge may include at least one of the following:
identification information of a neighbor cell, frequency information of the neighbor cell, or RAT information of the neighbor cell.

Optionally, backscatter signals sent by zero-power-consumption devices deployed at edges of different neighbor cells may carry identification information of different neighbor cells. On this basis, the terminal device may determine which neighbor cell the terminal device is currently close to, and may perform RRM measurement on the corresponding neighbor cell to determine whether the neighbor cell meets the threshold for cell reselection.

In summary, the backscatter signal may carry target information, and the target information may include at least one of the following:
the first indication information, the second indication information, the third indication information, the first control information, the identification information of a neighbor cell, the frequency information of the neighbor cell, the RAT information of the neighbor cell, or the edge indication information.

In some embodiments, the backscatter signal may be sent periodically, or may be sent based on triggering.

In some embodiments, the backscatter signal is sent based on a first signal from the terminal device. The first signal is a carrier signal and/or a trigger signal, the carrier signal is used for generating the backscatter signal, and the trigger signal is used for triggering the zero-power-consumption device to send the backscatter signal.

That is, the terminal device may provide a carrier signal for the zero-power-consumption device to perform backscattering, and/or the terminal device may trigger the zero-power-consumption device to send a backscatter signal. In other words, the first signal may be used as a carrier signal and/or a trigger signal.

For example, zero-power-consumption devices are deployed at cell edge, and the terminal device attempts to receive a backscatter signal corresponding to a zero-power-consumption device by sending a carrier signal. Due to the limited coverage of the carrier signal, if the terminal device moves to cell edge, the carrier signal sent by the terminal device may activate backscattering of a zero-power-consumption device deployed at cell edge. The zero-power-consumption terminal sends the target information to the terminal device through a backscatter signal. The terminal device determines the target measurement manner for performing RRM on a neighbor cell according to the received target information.

By way of example in connection with FIG. 9, when the terminal device moves to an edge position where cell 1 and cell 2 are bordered, the terminal device may receive a backscatter signal from a zero-power-consumption device at this position.

Optionally, the backscatter signal may include cell 2-related information, such as identification information of cell 2, which indicates that the terminal device has moved to the vicinity of cell 2. In this case, the terminal device may perform RRM measurement on cell 2.

Optionally, the backscatter signal may also carry first indication information for indicating that signal quality of the terminal device in the serving cell does not meet a signal quality threshold.

Optionally, the backscatter signal may also carry second indication information for indicating a specific signal quality value.

Optionally, the backscatter signal may also carry third indication information for indicating identification information of the zero-power-consumption device at this position.

Optionally, the backscatter signal may also carry first control information for indicating to perform RRM measurement.

By way of example in connection with FIG. 10, when UE1 is located at cell edge, UE1 may receive a backscatter signal from a zero-power-consumption device at this position (denoted as zero-power-consumption device 1). When UE2 is located in the center area of the cell, UE2 may receive a backscatter signal from a zero-power-consumption device in this area (denoted as zero-power-consumption device 2).

Optionally, the backscatter signal sent by zero-power-consumption device 1 may include at least one of the following information:
neighbor cell related information (e.g., identification information, frequency information, or RAT information of a neighbor cell);
first indication information, where the first indication information is used for indicating that signal quality of the terminal device in the serving cell does not meet a signal quality threshold;
second indication information for indicating a specific signal quality value;
third indication information for indicating identification information of zero-power-consumption device 1; or
first control information for indicating to perform RRM measurement.

Optionally, the backscatter signal sent by zero-power-consumption device 2 may include at least one of the following information:
first indication information, where the first indication information is used for indicating that signal quality of the terminal device in the serving cell meets a signal quality threshold;
second indication information for indicating a specific signal quality value;
third indication information for indicating identification information of zero-power-consumption device 2; or
first control information for indicating to perform relaxed RRM measurement.

In some embodiments, when UE2 receives backscatter signals sent by zero-power-consumption device 2 and zero-power-consumption device 1 successively (i.e., UE2 moves from the center area of the cell to the edge of the cell), UE2 may also determine the target measurement manner for performing RRM according to the change of the zero-power-consumption devices corresponding to the two backscatter signals.

For example, in the fourth correspondence, the change from zero-power-consumption device 2 to zero-power-consumption device 1 corresponds to non-relaxed RRM measurement, and the change from zero-power-consumption device 1 to zero-power-consumption device 2 corresponds to relaxed RRM measurement.

As another example, in the fifth correspondence, the change from zero-power-consumption device 2 to zero-power-consumption device 1 corresponds to a larger signal quality variation.

As yet another example, in the sixth correspondence, the change from zero-power-consumption device 2 to zero-power-consumption device 1 corresponds to that the signal quality variation meets the signal quality variation threshold.

Therefore, when UE2 receives backscatter signals sent by zero-power-consumption device 2 and zero-power-consumption device 1 successively, and the backscatter signals carry third indication information, UE2 may determine the change in zero-power-consumption devices, and may determine to perform non-relaxed RRM measurement according to the fourth correspondence. Alternatively, according to the fifth correspondence, the signal quality variation of UE2 in the serving cell may be determined, and the target measurement manner for performing RRM may be determined according to the signal quality variation threshold. Alternatively, according to the sixth correspondence, it may be determined that the signal quality variation meets the signal quality variation threshold, and then it is determined to perform non-relaxed RRM measurement.

In some embodiments, the first signal includes identification information of the serving cell. For example, the terminal device may modulate a signal to carry the identification information of the serving cell.

Optionally, after a zero-power-consumption device detects the information carried in the first signal, the zero-power-consumption device may perform backscattering by using the first signal to send target information to the terminal device.

In some embodiments, the first signal is sent periodically.

In some embodiments, the first signal is sent over specific resources.

In some embodiments, the transmitting period and/or transmitting resources for the first signal are configured by a network device, or may be determined according to a preset rule, or may be predefined.

In some embodiments, time domain resources and/or frequency domain resources for carrier signals corresponding to different zero-power-consumption devices are different.

That is, different zero-power-consumption devices may perform backscattering according to carrier signals over different resources.

Optionally, time domain resources and/or frequency domain resources for carrier signals corresponding to zero-power-consumption devices deployed at different cell edges are different.

In some embodiments, the time domain resources and/or frequency domain resources for the carrier signal are configured by a network device.

Embodiment 2: the set of reference devices include at least one control node.

Optionally, in Embodiment 2, the terminal device has a zero-power-consumption receiver, that is, the zero-power-consumption receiver of the terminal device is capable of backscattering a received signal.

In some embodiments, the carrier signal used for backscattering by the zero-power-consumption receiver of the terminal device may be sent by a control node, a network device, or other devices. The source of the carrier signal is not limited in the present application.

In some embodiments, the target signal(s) include a second signal sent by a control node.

In some embodiments, the second signal is used as a carrier signal for the terminal device to perform backscattering, and/or the second signal is used for triggering the terminal device to send a backscatter signal.

In some embodiments, due to the limited communication distance of zero-power-consumption devices, only when the terminal device approaches the control node, the second signal sent by the control node can activate the zero-power-consumption receiver of the terminal device. Therefore, according to the received second signal, the terminal device may determine the current area where the terminal device is located, signal quality of the terminal device in the serving cell, whether the signal quality meets the signal quality threshold, or the target measurement manner for performing RRM measurement.

In the related art, relaxed RRM measurement for neighbor cells by the terminal device is determined based on RSRP and RSRQ measurement results of a reference signal on a serving cell obtained by the terminal device, which requires the receiver of the terminal device to continuously detect reference signals from the serving cell to determine whether the measurement results meet the signal quality threshold of the relaxed RRM measurement, which is not conducive to power saving of the terminal device.

In contrast, in the embodiments of the present application, the receiver of the terminal device does not need to continuously detect reference signals on the serving cell, but may determine the target measurement manner for performing RRM measurement according to the reception of the second signal from the zero-power-consumption device, which is conducive to power saving of the terminal device.

In some embodiments, the second signal is used for indicating at least one of the following:
location information of the terminal device in the serving cell;
a target measurement manner for the terminal device to perform RRM;
signal quality of the terminal device in the serving cell; or
whether the signal quality of the terminal device in the serving cell meets a signal quality threshold.

In some embodiments, a change in control nodes corresponding to a plurality of second signals received by the terminal device is used to determine at least one of the following:
location information of the terminal device in the serving cell;
a target measurement manner for the terminal device to perform RRM;
a variation in signal quality of the terminal device in the serving cell; or
whether the variation in signal quality of the terminal device in the serving cell meets a signal quality variation threshold.

In some embodiments, the set of reference devices include at least one control node deployed at cell edge.

Optionally, the at least one control node may be used to determine whether the terminal device is located at cell edge.

For example, as shown in FIG. 11, a group of control nodes are deployed at the edge of each cell.

For example, in the case where the terminal device receives a second signal sent by a control node deployed at cell edge, the terminal device may determine that the terminal device is located at cell edge.

In some embodiments, the control node includes edge indication information for indicating that the terminal device is located at cell edge.

Optionally, when the terminal device receives a second signal including the edge indication information, the terminal device is triggered to perform RRM measurement on the neighbor cell.

Optionally, in the case where a control node is deployed at cell edge and the terminal device does not receive any second signal from the control node (in this case, the terminal device may be considered not at cell edge), the terminal device may skip performing RRM measurement on a neighbor cell, or relax RRM measurement on a neighbor cell.

In some embodiments, the control node is further configured to indicate at least one of the following:
identification information of a neighbor cell, frequency information of the neighbor cell, or RAT information of the neighbor cell.

Therefore, the terminal device determines which neighbor cell the terminal device is close to according to the identification information of a neighbor cell included in the second signal, or may determine whether the nearby neighbor cell is an inter-frequency neighbor cell or an intra-frequency neighbor cell according to the frequency information of the neighbor cell, or may determine whether the nearby neighbor cell is an intra-system cell according to the RAT information of the neighbor cell.

In some other embodiments, the set of reference devices include at least one control node deployed at an edge of a cell and at least one control node deployed within the cell.

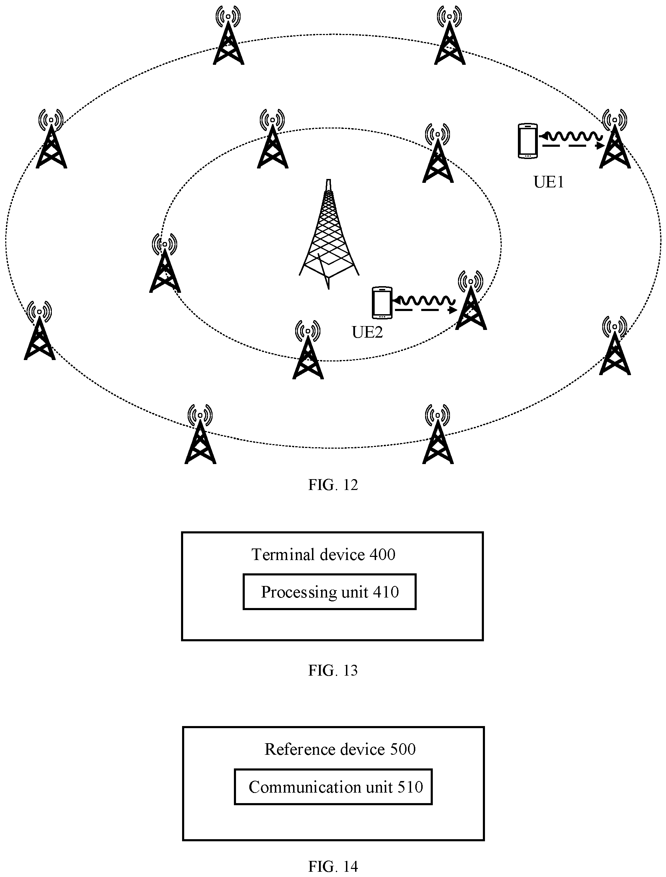

For example, as shown in FIG. 12, a group of control nodes are deployed at cell edge, and another group of control nodes are deployed within the cell.

Optionally, a second signal sent by a control node deployed at cell edge may include at least one of the following:
identification information of a neighbor cell, frequency information of the neighbor cell, or RAT information of the neighbor cell.

Optionally, second signals sent by control nodes deployed at edges of different neighbor cells may carry identification information of different neighbor cells. On this basis, the terminal device may determine which neighbor cell the terminal device is currently close to, and may further perform RRM measurement on the corresponding neighbor cell to determine whether the neighbor cell meets the threshold for cell reselection.

In summary, the second signal may carry target information, and the target information may include at least one of the following:
the first indication information, the second indication information, the third indication information, the first control information, the identification information of a neighbor cell, the frequency information of the neighbor cell, the RAT information of the neighbor cell, or the edge indication information.

In some embodiments, the second signal may be sent periodically.

In some embodiments, the second signal may be sent over specific resources.

In some embodiments, the transmitting period and/or transmitting resources for the second signal are configured by a network device, or may be determined according to a preset rule, or may be predefined.

In some embodiments, time domain resources and/or frequency domain resources for carrier signals sent by different control nodes are different.

Optionally, time domain resources and/or frequency domain resources for carrier signals sent by control nodes deployed at edges of different cells are different.

In some embodiments, the time domain resources and/or frequency domain resources for the carrier signal are configured by a network device.

For example, the control node is deployed at cell edge, and the control node sends a carrier signal and/or a trigger signal. The terminal device has a zero-power-consumption receiver. Since the coverage area of the carrier signal is limited, when the terminal device moves to cell edge, the carrier signal sent by the control node activates the zero-power-consumption receiver of the terminal device. The terminal device determines the target measurement manner for performing RRM on the neighbor cell according to the target information carried in the received second signal.

In some embodiments, the second signal may be sent by the control node according to first configuration information from a network device.

In some embodiments, there is a signaling interface between the control node and the network device, and the first configuration information is sent over the signal interface.

Optionally, the first configuration information is used for configuring at least one of the following:
a type of a signal sent by the control node, a power for the control node to send a signal, or spatial information for the control node to send a signal.

Optionally, the type of the signal sent by the control node may include but is not limited to a carrier signal or a trigger signal.

In some embodiments, spatial information for the control node to send the signal may include spatial direction for the control node to send the signal.

In some embodiments, the first configuration information may also be used for configuring a type of information carried by the second signal, so that the second signal may carry, for example, the first indication information, the second indication information, the third indication information, the first control information, the edge indication information, etc.

By way of example in connection with FIG. 11, when the terminal device moves to an edge position where cell 1 and cell 2 are bordered, the terminal device may receive a second signal from the control node at this position.

Optionally, the second signal may include cell 2-related information, such as identification information of cell 2, which indicates that the terminal device has moved to the vicinity of cell 2. In this case, the terminal device may perform RRM measurement on cell 2.

Optionally, the second signal may also carry first indication information for indicating that signal quality of the terminal device in the serving cell does not meet a signal quality threshold.

Optionally, the second signal may also carry second indication information for indicating a specific signal quality value.

Optionally, the second signal may also carry third indication information for indicating identification information of the control node at this position.

Optionally, the second signal may also carry first control information for indicating to perform RRM measurement.

By way of example in connection with FIG. 12, when UE1 is located at cell edge, UE1 may receive a second signal from a control node at this position (denoted as control node 1). When UE2 is located in the center area of the cell, UE2 may receive a second signal from a control node in this area (denoted as control node 2).

Optionally, the second signal sent by the control node 1 may include at least one of the following information:
neighbor cell related information (e.g., identification information, frequency information, or RAT information of a neighbor cell);
first indication information, where the first indication information is used for indicating that signal quality of the terminal device in the serving cell does not meet a signal quality threshold;
second indication information for indicating a specific signal quality value;
third indication information for indicating identification information of control node 1; or
first control information for indicating to perform RRM measurement.

Optionally, the second signal sent by control node 2 may include at least one of the following information:
first indication information, where the first indication information is used for indicating that signal quality of the terminal device in the serving cell meets a signal quality threshold;
second indication information for indicating a specific signal quality value;
third indication information for indicating identification information of control node 2; or
first control information for indicating to perform relaxed RRM measurement.

In some embodiments, when UE2 receives second signals sent by control node 2 and control node 1 successively (i.e., UE2 moves from the center area of the cell to the edge of the cell), UE2 may also determine the target measurement manner for performing RRM according to the change of the control nodes corresponding to the two second signals.

For example, in the fourth correspondence, the change from control node 2 to control node 1 corresponds to non-relaxed RRM measurement, and the change from control node 1 to control node 2 corresponds to relaxed RRM measurement.

As another example, in the fifth correspondence, the change from control node 2 to control node 1 corresponds to a larger signal quality variation.

As yet another example, in the sixth correspondence, the change from control node 2 to control node 1 corresponds to that the signal quality variation meets the signal quality variation threshold.

Therefore, when UE2 receives backscatter signals sent by control node 2 and control node 1 successively, and the backscatter signals carry third indication information, UE2 may determine the change in control nodes, and may determine to perform non-relaxed RRM measurement according to the fourth correspondence. Alternatively, according to the fifth correspondence, the signal quality variation of UE2 in the serving cell may be determined, and the target measurement manner for performing RRM may be determined according to the signal quality variation threshold. Alternatively, according to the sixth correspondence, it may be determined that the signal quality variation meets the signal quality variation threshold, and then it is determined to perform non-relaxed RRM measurement.

In some embodiments, after receiving the second signal from the control node, the terminal device may not need to send a backscatter signal, and determine the target measurement manner for performing RRM according to the second signal only.

In some other embodiments, after receiving the second signal from the control node, the terminal device may send a backscatter signal. For example, the terminal device may perform backscattering by using the second signal to send second control information to the network device. The second control information is acknowledgement information of the second signal, or the second control information is used for indicating identification information of the control node corresponding to the second signal. Therefore, the network device can determine the number of UEs at cell edge according to the second control information, which facilitates the network device to reasonably switch the allocation of resources and is conducive to network power saving.

In summary, in the embodiments of the present application, the zero-power-consumption communication may be used to assist the terminal device in determining the target measurement manner for performing RRM. In this way, the receiver of the terminal device does not need to continuously detect signal quality of reference signals on the serving cell, which is conducive to terminal power saving.

With reference to FIGS. 8 to 12, method embodiments of the present application are described in detail in the above. With reference to FIGS. 13 to 17, device embodiments of the present application will be described in the following. It should be understood that the device embodiments and the method embodiments may correspond to each other, and similar descriptions may refer to the method embodiments.

FIG. 13 illustrates a schematic block diagram of a terminal device 400 according to embodiments of the present application. As shown in FIG. 13, the terminal device 400 includes:
a processing unit 410 configured to determine a target measurement manner for performing radio resource management (RRM) according to target signal(s) sent by at least one reference device in a set of reference devices, where the target signal(s) are transmitted over zero-power-consumption radio interface(s).

In some embodiments, the target signal(s) are used to indicate at least one of the following:
the target measurement manner for the terminal device to perform RRM;
signal quality of the terminal device in a serving cell; or
whether the signal quality of the terminal device in the serving cell meets a signal quality threshold.

In some embodiments, the target signal(s) include first indication information for indicating whether signal quality of the terminal device in a serving cell meets a signal quality threshold.

In some embodiments, the processing unit 410 is further configured to:
determine whether the signal quality of the terminal device in the serving cell meets the signal quality threshold according to first indication information included in a received target signal; and
determine the target measurement manner for performing RRM according to whether the signal quality of the terminal device in the serving cell meets the signal quality threshold.

In some embodiments, the target signal(s) include second indication information for indicating signal quality of the terminal device in a serving cell.

In some embodiments, the processing unit 410 is further configured to:
determine the signal quality of the terminal device in the serving cell according to second indication information included in a received target signal; and
determine the target measurement manner for performing RRM according to whether the signal quality of the terminal device in the serving cell meets a signal quality threshold.

In some embodiments, the processing unit 410 is further configured to:
determine a variation in signal quality of the terminal device in the serving cell according to second indication information included in each of a plurality of target signals received within a first time period; and
determine the target measurement manner for performing RRM according to whether the variation in signal quality of the terminal device in the serving cell meets a signal quality variation threshold.

In some embodiments, the target signal(s) include third indication information for indicating identification information of a reference device for sending a target signal.

In some embodiments, reference devices in the set of reference devices have a first correspondence with whether signal qualities of the terminal device in a serving cell meet a signal quality threshold.

In some embodiments, the processing unit 410 is further configured to:
determine identification information of a reference device for sending a target signal according to third indication information included in the received target signal;
determine whether the signal quality of the terminal device in the serving cell meets the signal quality threshold according to the identification information of the reference device for sending the target signal and the first correspondence; and
determine the target measurement manner for performing RRM according to whether the signal quality of the terminal device in the serving cell meets the signal quality threshold.

In some embodiments, reference devices in the set of reference devices have a second correspondence with signal qualities of the terminal device in the serving cell.

In some embodiments, the processing unit 410 is further configured to:
determine identification information of a reference device for sending a target signal according to third indication information included in the received target signal;
determine the signal quality of the terminal device in the serving cell according to the identification information of the reference device for sending the target signal and the second correspondence; and
determine the target measurement manner for performing RRM according to whether the signal quality of the terminal device in the serving cell meets the signal quality threshold.

In some embodiments, the processing unit 410 is further configured to:
determine identification information of a plurality of reference devices according to third indication information included in each of a plurality of target signals received within a first time period;
determine a variation in signal quality of the terminal device in the serving cell according to the identification information of the plurality of reference devices and the second correspondence; and
determine the target measurement manner for performing RRM according to whether the variation in signal quality of the terminal device in the serving cell meets a signal quality variation threshold.

In some embodiments, reference devices in the set of reference devices have a third correspondence with target measurement manners for the terminal device to perform RRM.

In some embodiments, the processing unit 410 is further configured to:
determine identification information of a reference device for sending a target signal according to third indication information included in the received target signal; and
determine the target measurement manner for performing RRM according to the identification information of the reference device for sending the target signal and the third correspondence.

In some embodiments, the target signal(s) include first control information for indicating a target measurement manner for the terminal device to perform RRM.

In some embodiments, the processing unit 410 is further configured to:
determine the target measurement manner for performing RRM according to first control information included in a received target signal.

In some embodiments, the set of reference devices include at least one zero-power-consumption device.

In some embodiments, the target signal(s) include a backscatter signal sent by a zero-power-consumption device.

In some embodiments, the backscatter signal is further used to indicate at least one of following: identification information of a neighbor cell, frequency information of the neighbor cell, or radio access technology (RAT) information of the neighbor cell.

In some embodiments, the backscatter signal is sent based on a first signal from the terminal device.

In some embodiments, the first signal is a carrier signal and/or a trigger signal, the carrier signal is used for generating the backscatter signal, and the trigger signal is used for triggering the zero-power-consumption device to send the backscatter signal.

In some embodiments, the first signal includes identification information of a serving cell.

In some embodiments, the first signal is sent periodically.

In some embodiments, the backscatter signal is obtained by backscattering a carrier signal, and the carrier signal is sent by the terminal device or a network device.

In some embodiments, time domain resources and/or frequency domain resources for carrier signals corresponding to different zero-power-consumption devices are different.

In some embodiments, time domain resources and/or frequency domain resources for the carrier signal are configured by a network device.

In some embodiments, the set of reference devices include at least one control node, and the target signal(s) include a second signal sent by the control node.

In some embodiments, the second signal is used as a carrier signal for the terminal device to perform backscattering, and/or the second signal is used for triggering the terminal device to send a backscatter signal..

In some embodiments, the second signal is further used to indicate at least one of the following information:
identification information of a neighbor cell, frequency information of the neighbor cell, or RAT information of the neighbor cell.

In some embodiments, time domain resources and/or frequency domain resources used by different control nodes to send carrier signals are different.

In some embodiments, time domain resources and/or frequency domain resources used by the control node to send a carrier signal are configured by a network device.

In some embodiments, the terminal device has a first receiver and a second receiver, power consumption of the first receiver is lower than power consumption of the second receiver. The target signal(s) are received by the terminal device based on the first receiver, and measurement for the RRM is performed by the terminal device based on the second receiver.

Optionally, in some embodiments, the communication unit may be a communication interface or a transceiver, or an input/output interface of a communication chip or a system on chip. The processing unit may include one or more processors.

It should be understood that the terminal device 400 according to the embodiments of the present application may correspond to the terminal device in the method embodiments of the present application, and the above-mentioned and other operations and/or functions of various units in the terminal device 400 are for implementing corresponding processes of the terminal device in the methods shown in FIGS. 8 to 12, and will not be repeated herein for brevity.

FIG. 14 illustrates a schematic block diagram of a reference device 500 according to embodiments of the present application. As shown in FIG. 14, the reference device 500 includes:
a communication unit 510 configured to send a target signal, where the target signal is used by a terminal device to determine a target measurement manner for performing radio resource management (RRM), and the target signal is transmitted over a zero-power-consumption radio interface.

In some embodiments, the target signal is used to indicate at least one of the following:
the target measurement manner for the terminal device to perform RRM;
signal quality of the terminal device in a serving cell; or
whether the signal quality of the terminal device in the serving cell meets a signal quality threshold.

In some embodiments, the target signal includes first indication information for indicating whether signal quality of the terminal device in a serving cell meets a signal quality threshold.

In some embodiments, the target signal includes second indication information for indicating signal quality of the terminal device in a serving cell.

In some embodiments, the target signal includes third indication information for indicating identification information of the reference device for sending the target signal.

In some embodiments, the reference device has a first correspondence with whether signal quality of the terminal device in a serving cell meets a signal quality threshold.

In some embodiments, the reference device has a second correspondence with signal quality of the terminal device in a serving cell.

In some embodiments, the reference device has a third correspondence with a target measurement manner for the terminal device to perform RRM on a neighbor cell.

In some embodiments, the target signal includes first control information for indicating the target measurement manner for the terminal device to perform RRM.

In some embodiments, the target signal is further used to indicate at least one of the following information:
identification information of a neighbor cell, frequency information of the neighbor cell, or radio access technology (RAT) information of the neighbor cell.

In some embodiments, the reference device is a zero-power-consumption device.

In some embodiments, the target signal is a backscatter signal sent by the zero-power-consumption device.

In some embodiments, the communication unit 510 is further configured to:
receive a first signal from the terminal device, where the first signal is a carrier signal and/or a trigger signal, the carrier signal is used for the reference device to generate a backscatter signal, and the trigger signal is used for triggering the reference device to send a backscatter signal.

In some embodiments, the first signal includes identification information of a serving cell.

In some embodiments, the first signal is sent periodically.

In some embodiments, the backscatter signal is obtained by backscattering a carrier signal, and the carrier signal is sent by the terminal device or a network device.

In some embodiments, time domain resources and/or frequency domain resources for carrier signals corresponding to different zero-power-consumption devices are different.

In some embodiments, time domain resources and/or frequency domain resources for the carrier signal are configured by the network device.

In some embodiments, the reference device is a control node.

In some embodiments, the target signal includes a second signal sent by the control node.

In some embodiments, the second signal may be used as a carrier signal for the terminal device to perform backscattering, and/or the second signal is used to trigger the terminal device to send a backscatter signal.

In some embodiments, the communication unit 510 is further configured to:
receive first configuration information sent by a network device, where the first configuration information is used to configure at least one of following:
a type of a signal sent by the reference device, a power for the reference device to send a signal, or spatial information for the reference device to send a signal.

In some embodiments, the second signal is a carrier signal, and time domain resources and/or frequency domain resources used by different control nodes to send carrier signals are different.

In some embodiments, time domain resources and/or frequency domain resources used by the control node to send a carrier signal are configured by a network device.

Optionally, in some embodiments, the above-mentioned communication unit may be a communication interface or a transceiver, or an input/output interface of a communication chip or a system on chip. The above-mentioned processing unit may include one or more processors.

It should be understood that the reference device 500 according to embodiments of the present application may correspond to the reference device in the method embodiments of the present application, and the above-mentioned and other operations and/or functions of various units in the reference device 500 are for implementing corresponding processes of the reference device in the methods shown in FIGS. 8 to 12, and will not be repeated herein for brevity.

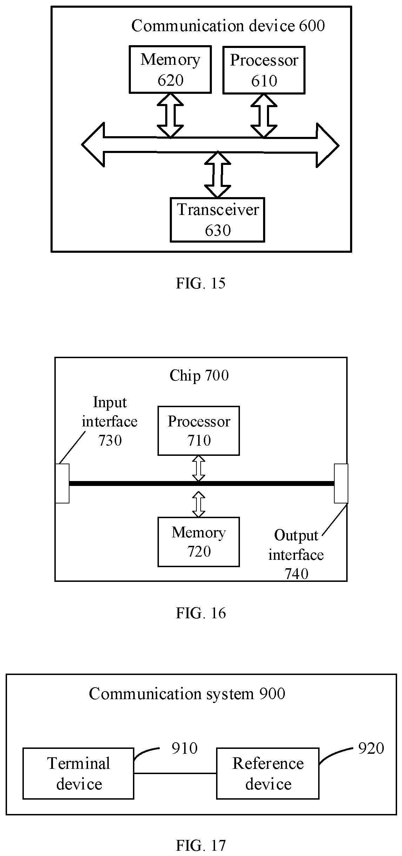

FIG 15 is a schematic structure diagram of a communication device 600 provided by embodiments of the present application. The communication device 600 shown in FIG. 15 includes a processor 610, which may call and run a computer program from a memory to implement the methods in the embodiments of the present application.

Optionally, as shown in FIG. 15, the communication device 600 may further include a memory 620. The processor 610 may call and run a computer program from the memory 620 to implement the methods of the embodiments of the present application.

The memory 620 may be a separate device independent of the processor 610, or may be integrated in the processor 610.

Optionally, as shown in FIG. 15, the communication device 600 may further include a transceiver 5630, and the processor 610 may control the transceiver 630 to communicate with another device. Specifically, the transceiver may send information or data to another device or receive information or data sent by another device.

The transceiver 630 may include a transmitter and a receiver. The transceiver 630 may further include antenna(s), and the number of the antenna(s) may be one or more.

Optionally, the communication device 600 may specifically be the reference device in the embodiments of the present application, and the communication device 600 may implement corresponding processes implemented by the reference device in various methods in the embodiments of the present application, which will not be repeated here for brevity.

Optionally, the communication device 600 may specifically be a mobile terminal/terminal device in the embodiments of the present application, and the communication device 600 may implement corresponding processes implemented by the mobile terminal/terminal device in various methods in the embodiments of the present application, which will not be repeated here for brevity.

FIG. 16 is a schematic structural diagram of a chip in embodiments of the present application. The chip 700 shown in FIG. 16 includes a processor 710. The processor 710 may call and run a computer program from a memory to implement the methods in the embodiments of the present application.

Optionally, as shown in FIG. 16, the chip 700 may further include a memory 720. The processor 710 may call and run a computer program from the memory 720 to implement the methods in the embodiments of the present application.

The memory 720 may be a separate device independent of the processor 710, or may be integrated in the processor 710.

Optionally, the chip 700 may further include an input interface 730. The processor 710 may control the input interface 730 to communicate with another device or chip. Specifically, the processor 710 may obtain information or data sent by another device or chip.

Optionally, the chip 700 may further include an output interface 740. The processor 710 may control the output interface 740 to communicate with another device or chip. Specifically, the processor 710 may output information or data to another device or chip.

Optionally, the chip may be applied to the reference device in the embodiments of the present application, and the chip may implement corresponding processes implemented by the reference device in various methods in the embodiments of the present application, which will not be repeated here for brevity.

Optionally, the chip may be applied to the mobile terminal/terminal device in the embodiments of the present application, and the chip may implement corresponding processes implemented by the mobile terminal/terminal device in various methods in the embodiments of the present application, which will not be repeated here for brevity.

It should be understood that the chip mentioned in the embodiments of the present application may also be referred to as a system-level chip, a system chip, a chip system, a system on chip, etc.

FIG. 17 is a schematic block diagram of a communication system 900 provided by embodiments of the present application. As shown in FIG. 17, the communication system 900 includes a terminal device 910 and a reference device 920.

The terminal device 910 may be configured to implement the corresponding functions implemented by the terminal device in the above-mentioned methods, and the reference device 920 may be configured to implement the corresponding functions implemented by the reference device in the above-mentioned methods, which will not be repeated herein for brevity.

It should be understood that the processor in the embodiments of the present application may be an integrated circuit chip with a capability for processing signals. In an implementation process, various steps of the method embodiments described above may be completed through an integrated logic circuit of hardware in a processor or instructions in a form of software. The above processor may be a general purpose processor, a digital signal processor (DSP), an application specific integrated circuit (ASIC), a field programmable gate array (FPGA), or another programmable logic device, a discrete gate or transistor logic device, or a discrete hardware component. The processor may implement various methods, steps, and logic block diagrams disclosed in the embodiments of the present application. The general purpose processor may be a microprocessor or the processor may be any conventional processor. The steps of the methods disclosed in connection with the embodiments of the present application may be directly embodied by execution of a hardware decoding processor, or by execution of a combination of hardware and software modules in a decoding processor. The software modules may be located in a storage medium commonly used in the art, such as a random access memory, a flash memory, a read-only memory, a programmable read-only memory or an electrically erasable programmable memory, or a register. The storage medium is located in a memory, and the processor reads information in the memory and completes the steps of the above methods in combination with hardware of the processor.

It will be appreciated that the memory in the embodiments of the present application may be a transitory memory or a non-transitory memory, or may include both transitory and non-transitory memories. The non-transitory memory may be a read-only memory (ROM), a programmable ROM (PROM), an erasable PROM (EPROM), an electrically EPROM (EEPROM), or a flash memory. The transitory memory may be a random access memory (RAM) which serves as an external cache. As an example, but not as a limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that the memories of the systems and methods described herein are intended to include, but are not limited to, these and any other suitable types of memories.

It should be understood that the above memories are described as examples rather than limitations. For example, the memory in the embodiments of the present application may be a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), or a direct Rambus RAM (DR RAM). That is to say, the memories in the embodiments of the present application are intended to include, but are not limited to, these and any other suitable types of memories.

The embodiments of the present application further provide a computer-readable storage medium having stored a computer program thereon.

Optionally, the computer-readable storage medium may be applied to the network device in the embodiments of the present application, and the computer program causes a computer to perform corresponding processes implemented by the network device in various methods in the embodiments of the present application, which will not be repeated here for brevity.

Optionally, the computer-readable storage medium may be applied in the mobile terminal/terminal device of the embodiments of the present application, and the computer program causes a computer to perform corresponding processes implemented by the mobile terminal/terminal device in various methods in the embodiments of the present application, which will not be repeated here for brevity.

The embodiments of the present application further provide a computer program product, including computer program instructions.

Optionally, the computer program product may be applied to the network device in the embodiments of the present application, and the computer program instructions cause a computer to perform corresponding processes implemented by the network device in various methods in the embodiments of the present application, which will not be repeated here for brevity.

Optionally, the computer program product may be applied to the mobile terminal/terminal device in the embodiments of the present application, and the computer program instructions cause a computer to perform corresponding processes implemented by the mobile terminal/terminal device in various methods in the embodiments of the present application, which will not be repeated here for brevity.

The embodiments of the present application further provide a computer program.

Optionally, the computer program may be applied to the network device in the embodiments of the present application. When running on a computer, the computer program causes the computer to perform corresponding processes implemented by the network device in various methods in the embodiments of the present application, which will not be repeated here for brevity.

Optionally, the computer program may be applied to the mobile terminal/terminal device in the embodiments of the present application. When running on a computer, the computer program causes the computer to perform corresponding processes implemented by the mobile terminal/terminal device in various methods in the embodiments of the present application, which will not be repeated here for brevity.

Those of ordinary skills in the art will recognize that units and algorithm steps of various examples described in connection with the embodiments disclosed herein may be implemented in electronic hardware, or a combination of computer software and electronic hardware. Whether these functions are implemented in a form of hardware or software depends on a specific application and a design constraint of a technical solution. Those skilled in the art may use different methods to implement the described functions for each specific application, but such implementation should not be considered to be beyond the scope of the present application.

Those skilled in the art may clearly understand that for convenience and conciseness of description, specific working processes of the systems, devices/apparatuses, and units described above may refer to corresponding processes in the aforementioned method embodiments, and details will not be repeated here.

In several embodiments according to the present application, it should be understood that the disclosed systems, devices/apparatuses, and methods may be implemented in other ways. For example, the device/apparatus embodiments described above are only illustrative, for example, the division of the units is only a logical function division, and there may be other division manners in actual implementation. For example, multiple units or components may be combined or integrated into another system, or some features may be ignored or not executed. In addition, coupling or direct coupling or communication connection shown or discussed between each other, which may be indirect coupling or communication connection between the devices or units via some interfaces, may be electrical, mechanical, or in other forms.

The units described as separate components may be or may be not physically separated, and the component shown as a unit may be or may be not a physical unit, i.e., it may be located in one place or may be distributed on multiple network units. Some or all of units may be selected according to actual needs to achieve purposes of technical solutions of the embodiments.

In addition, various functional units in various embodiments of the present application may be integrated in one processing unit, or various units may be physically present separately, or two or more units may be integrated in one unit.

The functions, if implemented in a form of software functional units and sold or used as an independent product, may be stored in a computer-readable storage medium. Based on such understanding, the technical solutions of the present application, in essence, or the part which contributes to the prior art, or part of the technical solutions, may be embodied in the form of a software product, in which the computer software product is stored in one storage medium including a number of instructions for causing one computer device (which may be a personal computer, a server, or a network device) to perform all or some of the steps of the methods according to various embodiments of the present application. The aforementioned storage media includes various media capable of storing program codes, such as a U disk, a mobile hard disk, a read-only memory (ROM), a random access memory (RAM), a magnetic disk, an optical disk, and the like.

The foregoing are merely specific embodiments of the present application, but the protection scope of the present application is not limited thereto. Any person skilled in the art may readily conceive variations or substitutions within the technical scope disclosed by the present application, which should be included within the protection scope of the present application. Therefore, the protection scope of the present application shall be subject to the protection scope of the claims.

## Claims

1. A wireless communication method, comprising:
determining, by a terminal device, a target measurement manner for performing radio resource management (RRM) according to target signal(s) sent by at least one reference device in a set of reference devices, wherein the target signal(s) are transmitted over zero-power-consumption radio interface(s).

2. The method according to claim 1, wherein the target signal(s) are used to indicate at least one of:
a target measurement manner for the terminal device to perform RRM;
signal quality of the terminal device in a serving cell; or
whether the signal quality of the terminal device in the serving cell meets a signal quality threshold.

3. The method according to claim 1 or 2, wherein the target signal(s) comprise first indication information for indicating whether signal quality of the terminal device in a serving cell meets a signal quality threshold.

4. The method according to claim 3, wherein determining, by the terminal device, the target measurement manner for performing radio resource management (RRM) according to the target signal(s) sent by the at least one reference device in the set of reference devices comprises:
determining whether the signal quality of the terminal device in the serving cell meets the signal quality threshold according to first indication information in a received target signal; and
determining the target measurement manner for performing RRM according to whether the signal quality of the terminal device in the serving cell meets the signal quality threshold.

5. The method according to claim 1 or 2, wherein the target signal(s) comprise second indication information for indicating signal quality of the terminal device in a serving cell.

6. The method according to claim 5, wherein determining, by the terminal device, the target measurement manner for performing radio resource management (RRM) according to the target signal(s) sent by the at least one reference device in the set of reference devices comprises:
determining the signal quality of the terminal device in the serving cell according to second indication information in a received target signal; and
determining the target measurement manner for performing RRM according to whether the signal quality of the terminal device in the serving cell meets a signal quality threshold.

7. The method according to claim 5, wherein determining, by the terminal device, the target measurement manner for performing radio resource management (RRM) according to the target signal(s) sent by the at least one reference device in the set of reference devices comprises:
determining a variation in signal quality of the terminal device in the serving cell according to second indication information in each of a plurality of target signals received within a first time period; and
determining the target measurement manner for performing RRM according to whether the variation in signal quality of the terminal device in the serving cell meets a signal quality variation threshold.

8. The method according to claim 1 or 2, wherein the target signal(s) comprise third indication information for indicating identification information of a reference device for sending a target signal.

9. The method according to claim 8, wherein reference devices in the set of reference devices have a first correspondence with whether signal qualities of the terminal device in a serving cell meet a signal quality threshold.

10. The method according to claim 9, wherein determining, by the terminal device, the target measurement manner for performing radio resource management (RRM) according to the target signal(s) sent by the at least one reference device in the set of reference devices comprises:
determining, according to the third indication information in the received target signal, identification information of the reference device for sending the target signal;
determining whether signal quality of the terminal device in the serving cell meets the signal quality threshold according to the identification information of the reference device for sending the target signal and the first correspondence; and
determining the target measurement manner for performing RRM according to whether the signal quality of the terminal device in the serving cell meets the signal quality threshold.

11. The method according to claim 8, wherein reference devices in the set of reference devices have a second correspondence with signal qualities of the terminal device in a serving cell.

12. The method according to claim 11, wherein determining, by the terminal device, the target measurement manner for performing radio resource management (RRM) according to the target signal(s) sent by the at least one reference device in the set of reference devices comprises:
determining, according to the third indication information in the received target signal, identification information of the reference device for sending the target signal;
determining signal quality of the terminal device in the serving cell according to identification information of the reference device for sending the target signal and the second correspondence; and
determining the target measurement manner for performing RRM according to whether the signal quality of the terminal device in the serving cell meets the signal quality threshold.

13. The method according to claim 11, wherein determining, by the terminal device, the target measurement manner for performing radio resource management (RRM) according to the target signal(s) sent by the at least one reference device in the set of reference devices comprises:
determining, according to third indication information in each of a plurality of target signals received within a first time period, identification information of a plurality of reference devices;
determining a variation in signal quality of the terminal device in the serving cell according to the identification information of the plurality of reference devices and the second correspondence; and
determining the target measurement manner for performing RRM according to whether the variation in signal quality of the terminal device in the serving cell meets a signal quality variation threshold.

14. The method according to claim 8, wherein reference devices in the set of reference devices have a third correspondence with target measurement manners for the terminal device to perform RRM.

15. The method according to claim 14, wherein determining, by the terminal device, the target measurement manner for performing radio resource management (RRM) according to the target signal(s) sent by the at least one reference device in the set of reference devices comprises:
determining, according to the third indication information in the received target signal, identification information of the reference device sending the target signal; and
determining the target measurement manner for performing RRM according to identification information of the reference device for sending the target signal and the third correspondence.

16. The method according to claim 1 or 2, wherein the target signal(s) comprise first control information for indicating a target measurement manner for the terminal device to perform RRM.

17. The method according to claim 16, wherein determining, by the terminal device, the target measurement manner for performing radio resource management (RRM) according to the target signal(s) sent by the at least one reference device in the set of reference devices comprises:
determining the target measurement manner for performing RRM according to first control information in a received target signal.

18. The method according to any one of claims 1 to 17, wherein the set of reference devices comprise at least one zero-power-consumption device.

19. The method according to claim 18, wherein the target signal(s) comprise a backscatter signal sent by a zero-power-consumption device.

20. The method according to claim 19, wherein the backscatter signal is further used to indicate at least one of: identification information of a neighbor cell, frequency information of the neighbor cell, or radio access technology (RAT) information of the neighbor cell.

21. The method according to claim 19 or 20, wherein the backscatter signal is sent based on a first signal from the terminal device.

22. The method according to claim 21, wherein the first signal is a carrier signal and/or a trigger signal, the carrier signal is used for generating the backscatter signal, and the trigger signal is used for triggering the zero-power-consumption device to send the backscatter signal.

23. The method according to claim 21 or 22, wherein the first signal comprises identification information of a serving cell.

24. The method according to any one of claims 21 to 23, wherein the first signal is sent periodically.

25. The method according to any one of claims 19 to 24, wherein the backscatter signal is obtained by backscattering a carrier signal, and the carrier signal is sent by the terminal device or a network device.

26. The method according to claim 25, wherein time domain resources and/or frequency domain resources for carrier signals corresponding to different zero-power-consumption devices are different.

27. The method according to claim 26, wherein time domain resources and/or frequency domain resources for the carrier signals are configured by the network device.

28. The method according to any one of claims 1 to 17, wherein the set of reference devices comprise at least one control node, and the target signal(s) comprise a second signal sent by the control node.

29. The method according to claim 28, wherein the second signal is used as a carrier signal for the terminal device to perform backscattering, and/or the second signal is used for triggering the terminal device to send a backscatter signal.

30. The method according to claim 28 or 29, wherein the second signal is further used for indicating at least one of following information:
identification information of a neighbor cell, frequency information of the neighbor cell, or RAT information of the neighbor cell.

31. The method according to claim 29 or 30, wherein time domain resources and/or frequency domain resources used by different control nodes to send carrier signals are different.

32. The method according to claim 31, wherein time domain resources and/or frequency domain resources used by the control node to send a carrier signal are configured by a network device.

33. The method according to any one of claims 1-32, wherein the terminal device has a first receiver and a second receiver, power consumption of the first receiver is lower than power consumption of the second receiver, the target signal(s) are received by the terminal device based on the first receiver, and measurement for the RRM is performed by the terminal device based on the second receiver.

34. A wireless communication method, comprising:
sending, by a reference device, a target signal, wherein the target signal is used by a terminal device to determine a target measurement manner for performing radio resource management (RRM), and the target signal is transmitted over a zero-power-consumption radio interface.

35. The method according to claim 34, wherein the target signal is used for indicating at least one of:
the target measurement manner for the terminal device to perform RRM;
signal quality of the terminal device in a serving cell; or
whether the signal quality of the terminal device in the serving cell meets a signal quality threshold.

36. The method according to claim 34 or 35, wherein the target signal comprises first indication information for indicating whether signal quality of the terminal device in a serving cell meets a signal quality threshold.

37. The method according to claim 34 or 35, wherein the target signal comprises second indication information for indicating signal quality of the terminal device in a serving cell.

38. The method according to claim 34 or 35, wherein the target signal comprises third indication information for indicating identification information of the reference device for sending the target signal.

39. The method according to claim 38, wherein the reference device has a first correspondence with whether a signal quality of the terminal device in a serving cell meets a signal quality threshold.

40. The method according to claim 38, wherein the reference device has a second correspondence with a signal quality of the terminal device in a serving cell.

41. The method according to claim 38, wherein the reference device has a third correspondence with a target measurement manner for the terminal device to perform RRM.

42. The method according to claim 34 or 35, wherein the target signal comprises first control information for indicating the target measurement manner for the terminal device to perform RRM.

43. The method according to any one of claims 34 to 42, wherein the target signal is further used for indicating at least one of following information: identification information of a neighbor cell, frequency information of the neighbor cell, or radio access technology (RAT) information of the neighbor cell.

44. The method according to any one of claims 34 to 43, wherein the reference device is a zero-power-consumption device.

45. The method according to claim 44, wherein the target signal is a backscatter signal sent by the zero-power-consumption device.

46. The method according to claim 44 or 45, further comprising:
receiving, by the reference device, a first signal from the terminal device, wherein the first signal is a carrier signal and/or a trigger signal, the carrier signal is used for the reference device to generate a backscatter signal, and the trigger signal is used for triggering the reference device to send a backscatter signal.

47. The method according to claim 46, wherein the first signal comprises identification information of a serving cell.

48. The method according to claim 46 or 47, wherein the first signal is sent periodically.

49. The method according to claim 45, wherein the backscatter signal is obtained by backscattering a carrier signal, and the carrier signal is sent by the terminal device or a network device.

50. The method according to claim 49, wherein time domain resources and/or frequency domain resources for carrier signals corresponding to different zero-power-consumption devices are different.

51. The method according to claim 49 or 50, wherein time domain resources and/or frequency domain resources for the carrier signal are configured by the network device.

52. The method according to any one of claims 34 to 43, wherein the reference device is a control node.

53. The method according to claim 52, wherein the target signal comprises a second signal sent by the control node.

54. The method according to claim 53, wherein the second signal is used as a carrier signal for the terminal device to perform backscattering, and/or the second signal is used for triggering the terminal device to send a backscatter signal.

55. The method according to any one of claims 52 to 54, further comprising:
receiving first configuration information sent by a network device, wherein the first configuration information is used for configuring at least one of:
a type of a signal sent by the reference device, a power for the reference device to send a signal, or spatial information for the reference device to send a signal.

56. The method according to claim 53 or 54, wherein the second signal is a carrier signal, and time domain resources and/or frequency domain resources used by different control nodes to send carrier signals are different.

57. The method according to claim 56, wherein time domain resources and/or frequency domain resources used by the control node to send a carrier signal are configured by a network device.

58. A terminal device, comprising:
a processing unit configured to determine a target measurement manner for performing radio resource management (RRM) according to target signal(s) sent by at least one reference device in a set of reference devices, wherein the target signal(s) are transmitted over zero-power-consumption radio interface(s).

59. A reference device, comprising:
a processing unit configured to send a target signal, wherein the target signal is used by a terminal device to determine a target measurement manner for performing radio resource management (RRM), and the target signal is transmitted over a zero-power-consumption radio interface.

60. A terminal device, comprising a processor and a memory, wherein the memory is configured to store a computer program, and the processor is configured to call and run the computer program stored in the memory to perform the method according to any one of claims 1 to 33.

61. A reference device, comprising a processor and a memory, wherein the memory is configured to store a computer program, and the processor is configured to call and run the computer program stored in the memory to perform the method according to any one of claims 34 to 57.

62. A chip, comprising a processor configured to call and run a computer program from a memory to cause a device installed with the chip to perform the method according to any one of claims 1 to 33 or the method according to any one of claims 34 to 57.

63. A computer-readable storage medium configured to store a computer program, wherein the computer program causes a computer to perform the method according to any one of claims 1 to 33 or the method according to any one of claims 34 to 57.

64. A computer program product, comprising computer program instructions, wherein the computer program instructions cause a computer to perform the method according to any one of claims 1 to 33 or the method according to any one of claims 34 to 57.

65. A computer program, wherein the computer program causes a computer to perform the method according to any one of claims 1 to 33 or the method according to any one of claims 34 to 57.
